(19) Europäisches Patentamt
European Patent Office
Office européen des brevets

(11) **EP 4 654 151 A1**

(12) **EUROPEAN PATENT APPLICATION**
published in accordance with Art. 153(4) EPC

(43) Date of publication:
**26.11.2025 Bulletin 2025/48**

(21) Application number: **24749754.8**

(22) Date of filing: **02.02.2024**

(51) International Patent Classification (IPC):
**G06V 10/26** (2022.01)

(86) International application number:
**PCT/CN2024/075458**

(87) International publication number:
**WO 2024/160275 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.02.2023 CN 202310125208**

(71) Applicant: **Huawei Technologies Co., Ltd.**
**Shenzhen, Guangdong 518129 (CN)**

(72) Inventors:
• **JIN, Huan**
**Shenzhen, Guangdong 518129 (CN)**
• **GAO, Bin**
**Shenzhen, Guangdong 518129 (CN)**
• **ZHAO, Yue**
**Shenzhen, Guangdong 518129 (CN)**
• **XUAN, Zhangyang**
**Shenzhen, Guangdong 518129 (CN)**
• **JIANG, Lihui**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **SEMANTIC SEGMENTATION MODEL TRAINING METHOD AND DEVICE, AND SEMANTIC SEGMENTATION METHOD AND DEVICE**

(57) This application discloses a semantic segmentation model training method and apparatus, and a semantic segmentation method and apparatus. The semantic segmentation model training method includes: inputting, into an initial semantic segmentation model, a first training sample image included in a first training sub-dataset, where the initial semantic segmentation model includes a first initial semantic segmentation module and a second initial semantic segmentation module, the second initial semantic segmentation module includes a first initial task independent module, and the first initial task independent module has a corresponding semantic segmentation task; performing, by the first initial semantic segmentation module, first feature processing on the first training sample image, to obtain a first image feature; obtaining, by the first initial task independent module in the second initial semantic segmentation module, a first semantic segmentation result based on the first image feature; and training the initial semantic segmentation model based on the first semantic segmentation result, to obtain a target semantic segmentation model. Therefore, training costs of the model can be effectively reduced, and accuracy of the semantic segmentation task can be improved.

FIG. 6

EP 4 654 151 A1

## Description

This application claims priority to Chinese Patent Application No. 202310125208.5, filed with the China National Intellectual Property Administration on February 3, 2023 and entitled "SEMANTIC SEGMENTATION MODEL TRAINING METHOD AND APPARATUS, AND SEMANTIC SEGMENTATION METHOD AND APPARATUS", which is incorporated herein by reference in its entirety.

## TECHNICAL FIELD

This application relates to the field of artificial intelligence technologies, and in particular, to a semantic segmentation model training method and apparatus, and a semantic segmentation method and apparatus.

## BACKGROUND

As a basic research direction in the field of computer vision (Computer Vision, CV), semantic segmentation (Semantic Segmentation) can provide a specific category for each pixel in an image, for example, analyze an object in an image or a video stream, and label, pixel by pixel, a category to which each pixel belongs. The semantic segmentation is widely applied to many fields such as autonomous driving, a smart city, and medical image processing.

With development of deep learning technologies in recent years, a data-driven semantic segmentation method based on a deep neural network has also made great progress. For training of a semantic segmentation model (for example, a deep neural network) in the semantic segmentation method, a training dataset including a large scale of training sample images (which may also be referred to as image data) and corresponding fine category labels need to be used based on a semantic segmentation task to be implemented.

In actual application, the semantic segmentation task to be implemented may change, and with the change of the semantic segmentation task, the required semantic segmentation model needs to change. Therefore, semantic segmentation models that can implement corresponding semantic segmentation tasks need to be trained based on different semantic segmentation tasks. The category label of the training sample image in the training dataset is usually manually labeled, which is labor-intensive, time-consuming, and costly. Therefore, training costs of the semantic segmentation model are high.

In addition, in actual application, there are limited training sample images labeled with the category labels in the training dataset (namely, labeled data). The limited training sample images result in training overfitting of the semantic segmentation model, and make it impossible to effectively distinguish between different categories of images. This finally leads to incorrect prediction of the semantic segmentation model, and affects accuracy of the semantic segmentation task.

Consequently, the current semantic segmentation model has problems such as high training costs and poor accuracy.

## SUMMARY

This application provides a semantic segmentation model training method and apparatus, a semantic segmentation method and apparatus, a computing device cluster, a computer program product including instructions, and a computer-readable storage medium, to resolve problems such as high training costs and poor accuracy of a semantic segmentation model in the conventional technology. In other words, the training costs of the semantic segmentation model can be effectively reduced, and accuracy of a semantic segmentation task can be improved.

To resolve the foregoing technical problem, according to a first aspect, an implementation of this application provides a semantic segmentation model training method, applied to an electronic device. The method includes: inputting, into an initial semantic segmentation model, a first training sample image included in a first training sub-dataset, where the first training sub-dataset has a corresponding semantic segmentation task, the first training sub-dataset includes at least one first training sample image, the first training sample image includes at least one first category label, the initial semantic segmentation model includes a first initial semantic segmentation module and a second initial semantic segmentation module, the second initial semantic segmentation module includes a first initial task independent module, and the first initial task independent module has a corresponding semantic segmentation task; performing, by the first initial semantic segmentation module, first feature processing on the first training sample image, to obtain a first image feature; obtaining, by the first initial task independent module in the second initial semantic segmentation module, a first semantic segmentation result based on the first image feature; and training the initial semantic segmentation model based on the first semantic segmentation result, to obtain a target semantic segmentation model.

In this implementation of this application, the initial semantic segmentation model includes two parts: the first initial semantic segmentation module and the second initial semantic segmentation module, the second initial semantic segmentation module includes the first initial task independent module, and the first initial task independent module has the corresponding semantic segmentation task. The first initial semantic segmentation module performs first feature processing on the first training sample image, to obtain the first image feature, and the first initial task independent module in the second initial semantic segmentation module obtains the first semantic segmentation result based on the first image feature. The semantic segmentation model is simple in structure and is easy to train. This effectively reduces training costs of the model, has a small network parameter, a small computing amount, and the like, and is applicable to arrangement on a device. In addition, the semantic segmentation task can be better performed. This improves accuracy of the semantic segmentation task.

In a possible implementation of the first aspect, the first training sample image includes at least one first category label, the first category label corresponds to a corresponding semantic segmentation task, and the first category label does not include all category labels corresponding to the semantic segmentation task. In other words, the first training sample image is partial labeled data corresponding to the semantic segmentation task.

For example, the semantic segmentation task is a semantic segmentation task of 10 categories (for example, segmentation of 10 categories such as a car, a pedestrian, and a fence), and the first category label includes less than 10 labels, for example, includes only a pedestrian, or includes only a car and a fence.

Therefore, in this implementation of this application, the semantic segmentation model can be trained based on the partial labeled data, and the partial labeled data does not need to be labeled with all categories. This greatly reduces labeling costs, and further, reduces the training costs of the model and shortens a model training period. In addition, the partial labeled data can be efficiently used. This improves utilization of the partial labeled data. In addition, the semantic segmentation model of all categories required by the semantic segmentation task can be obtained through training in a scenario with restricted computing power of the electronic device and the partial labeled data. In other words, the semantic segmentation model is obtained, where precision of the semantic segmentation model reaches or exceeds that of a semantic segmentation model that corresponds to a single semantic segmentation task and that is obtained based on partial labeled data.

In a possible implementation of the first aspect, a training dataset to which the first training sub-dataset belongs includes a plurality of training sub-datasets, the first initial semantic segmentation module is a shared module including a backbone network, the training sub-datasets correspond to different semantic segmentation tasks, the second initial semantic segmentation module includes a plurality of initial task independent modules, and the initial task independent modules correspond to different semantic segmentation tasks.

Therefore, in this implementation of this application, features of the training sub-datasets corresponding to different semantic segmentation tasks are first extracted by using the first initial semantic segmentation module used as the shared module, and then semantic segmentation results are obtained by using the initial task independent modules corresponding to different tasks. Based on the design of the initial semantic segmentation model, in a process of training the semantic segmentation model, the corresponding target semantic segmentation model can be obtained by training the initial semantic segmentation model based on the training sub-datasets corresponding to different semantic segmentation tasks. In addition, the semantic segmentation model is simple in network structure and is easy to train. This effectively reduces the training costs of the model, has the small network parameter, the small computing amount, and the like, and is applicable to the arrangement on the device.

In a possible implementation of the first aspect, the semantic segmentation task corresponding to the first training sub-dataset is the same as the semantic segmentation task corresponding to the first initial task independent module.

In a possible implementation of the first aspect, training the initial semantic segmentation model based on the first semantic segmentation result includes: training the first initial semantic segmentation module based on the first semantic segmentation result, to obtain a first target semantic segmentation model; and training the first initial task independent module based on the first semantic segmentation result, to obtain a first target task independent module, so as to obtain a second target semantic segmentation module including the first target task independent module.

In a possible implementation of the first aspect, the semantic segmentation task corresponding to the first training sub-dataset is different from the semantic segmentation task corresponding to the first initial task independent module.

In a possible implementation of the first aspect, training the initial semantic segmentation model based on the first semantic segmentation result includes: training the first initial semantic segmentation module based on the first semantic segmentation result, to obtain a first target semantic segmentation module.

In other words, in this implementation of this application, a semantic segmentation result corresponding to each semantic segmentation task is used only to update (that is, train) a corresponding task independent module, and the semantic segmentation result corresponding to each semantic segmentation task is also used to update (that is, train) the first initial semantic segmentation module used as the shared module. In this way, the first initial semantic segmentation module used as the shared module can learn knowledge of different semantic segmentation tasks, and learn a more shared feature, and for each semantic segmentation task, only the independent task independent module part is updated (that is, trained), to ensure that a feature learned by the part is unique to the task. In this way, accuracy of the semantic segmentation model can be effectively improved.

In a possible implementation of the first aspect, the first initial task independent module includes a first initial processing submodule and a second initial processing submodule, and that the first initial task independent module obtains the first semantic segmentation result based on the first image feature includes: The first initial processing submodule performs second feature processing on the first image feature, to obtain a second image feature; and the second initial processing submodule obtains the first semantic segmentation result based on the second image feature.

In this implementation of this application, the first initial processing submodule and the second initial processing submodule that are included in the initial task independent module perform different image feature processing, so that the corresponding semantic segmentation result can be accurately obtained.

In a possible implementation of the first aspect, that the second initial processing submodule obtains the first semantic segmentation result based on the second image feature includes: The second initial processing submodule performs third feature processing on the second image feature, to obtain a third image feature; and the second initial processing submodule obtains, based on the third image feature, probability values corresponding to different semantic segmentation results, and uses a semantic segmentation result with a maximum probability value as the first semantic segmentation result.

In this implementation of this application, the second initial processing submodule can accurately obtain the corresponding semantic segmentation result through further image feature processing and based on the probability values corresponding to different semantic segmentation results.

In a possible implementation of the first aspect, the first initial processing submodule is a multi-scale attention module based on an attention mechanism, and the second initial processing submodule is a segmentation head module.

In this implementation of this application, the first initial processing submodule is the multi-scale attention module based on the attention mechanism, so that the first initial processing submodule can adaptively extract features of different scales required by the tasks, and combine a plurality of semantic segmentation tasks into one network. This greatly reduces a delay, and facilitates deployment on the device. The second initial processing submodule is the segmentation head module, so that the second initial processing submodule can accurately obtain the semantic segmentation result corresponding to each semantic task.

In a possible implementation of the first aspect, the first feature processing is shared feature extraction processing, the first image feature is a multi-scale shared feature including shared features of a plurality of different scales, the second feature processing is feature fusion processing, the second image feature is a single-scale feature, the third feature processing is scale adjustment processing, and the third image feature is a single-scale feature whose scale is different from a scale of the second image feature.

In this implementation of this application, the first initial semantic segmentation module used as the shared module extracts the shared visual features from the input of the training sample image, to obtain the multi-scale shared feature, the multi-scale attention module based on the attention mechanism performs feature fusion processing based on the multi-scale shared feature, to obtain the single-scale feature, and the segmentation head module further performs processing such as scale adjustment based on the single-scale feature, to obtain the new single-scale feature, and obtain the corresponding semantic segmentation result. In this way, a more accurate semantic segmentation result can be obtained, and the accuracy of model semantic segmentation is further improved.

In a possible implementation of the first aspect, the scale of the third image feature is consistent with a scale of a training sample image corresponding to the third image feature, to improve accuracy of the semantic segmentation result. Certainly, the size of the third image feature may alternatively be selected and set to another size based on a requirement.

In a possible implementation of the first aspect, a training dataset to which the first training sub-dataset belongs includes a plurality of training sub-datasets, the training sub-datasets correspond to different semantic segmentation tasks, the second initial semantic segmentation module includes a plurality of initial task independent modules, and the initial task independent modules correspond to different semantic segmentation tasks, and the method further includes: inputting, into the initial semantic segmentation model, a training sample image included in each training sub-dataset, to obtain a corresponding semantic segmentation result; training the first initial semantic segmentation module based on the semantic segmentation result corresponding to each semantic segmentation task, to obtain the first target semantic segmentation module; and training, based on the semantic segmentation result corresponding to each semantic segmentation task, the initial task independent module corresponding to the semantic segmentation task, to obtain a target task independent module, so as to obtain the second target semantic segmentation module including the target task independent module.

In this implementation of this application, based on the design of the initial semantic segmentation model, in the process of training the semantic segmentation model, the corresponding target semantic segmentation model can be obtained by training the initial semantic segmentation model based on the training sub-datasets corresponding to different semantic segmentation tasks. The first initial semantic segmentation module extracts the multi-scale shared features from the training sample images, and inputs the multi-scale shared features into the second initial semantic segmentation module. The initial task independent module in the second initial semantic segmentation module obtains the semantic segmentation results of the corresponding semantic segmentation tasks based on the multi-scale shared features.

In this way, the semantic segmentation model can be trained based on the partial label training dataset, to obtain the target semantic segmentation model, and a problem of partial labeling of the training dataset is avoided, that is, the semantic segmentation model can be trained without supplementarily labeling the partial labeled data. This effectively reduces the training costs of the model, efficiently uses the partial labeled data, and improves the utilization of the partial labeled data. In addition, the semantic segmentation model of all categories required by the semantic segmentation task can be obtained through training in the scenario with restricted computing power of the electronic device and the partial labeled data. In other words, the semantic segmentation model is obtained, where precision of the semantic segmentation model reaches or exceeds that of the semantic segmentation model that corresponds to the single semantic segmentation task and that is obtained based on the partial labeled data.

In addition, the initial semantic segmentation model and the obtained target semantic segmentation model are simple in network structure and are easy to train. This effectively reduces the training costs of the model, has the small network parameter, the small computing amount, and the like, and is applicable to the arrangement on the device.

In addition, in the process of training the semantic segmentation model, more features can be used for model training based on the multi-scale shared feature, and a feature with better robustness can be learned. This can better resolve a problem of category imbalance, and effectively improves the accuracy of the obtained semantic segmentation model.

Further, different semantic segmentation tasks share the first initial semantic segmentation module, and have independent task independent modules. In actual application, if a requirement of a semantic segmentation task changes, only a corresponding task independent module needs to be modified (for example, a new task independent module is added or a task independent module is deleted), and the first initial semantic segmentation module does not need to be modified. Further, only the modified task independent module and the shared module need to be trained. Therefore, only a small quantity of model parameters of the task independent module need to be correspondingly modified. In this way, the semantic segmentation model can be adjusted by adding, deleting, or modifying the small quantity of parameters, to implement a corresponding new semantic segmentation task. This effectively reduces maintenance and training costs of the semantic segmentation model.

Further, in the process of training the semantic segmentation model, training the initial semantic segmentation model based on the semantic segmentation result may be updating (that is, training) the corresponding task independent module based on the semantic segmentation result corresponding to each semantic segmentation task, and updating (that is, training) the shared module based on the semantic segmentation result corresponding to each semantic segmentation task. In this way, the semantic segmentation result corresponding to each semantic segmentation task is used only to update (that is, train) the corresponding task independent module, and the semantic segmentation result corresponding to each semantic segmentation task is also used to update (that is, train) the shared module. In this way, the shared module can learn the knowledge of different semantic segmentation tasks, and learn the more shared feature, and for each semantic segmentation task, only the independent task independent module part is updated (that is, trained), to ensure that the feature learned by the part is unique to the task. In this way, the accuracy of the semantic segmentation model can be effectively improved.

In a possible implementation of the first aspect, the training dataset includes the first training sub-dataset and a second training sub-dataset, the first training sub-dataset corresponds to a first semantic segmentation task, the second training sub-dataset corresponds to a second semantic segmentation task, the second initial semantic segmentation module includes the first initial task independent module and a second initial task independent module, the first initial task independent module corresponds to the first semantic segmentation task, and the second initial task independent module corresponds to the second semantic segmentation task, and training, based on the semantic segmentation result corresponding to each semantic segmentation task, the initial task independent module corresponding to the semantic segmentation task, to obtain the target task independent module includes: training the first initial task independent module based on the semantic segmentation result corresponding to the first semantic segmentation task, to obtain the first target task independent module; and training the second initial task independent module based on the semantic segmentation result corresponding to the second semantic segmentation task, to obtain a second target task independent module.

According to a second aspect, an implementation of this application provides a semantic segmentation method, applied to an electronic device. The method includes: inputting, into a target semantic segmentation model, a to-be-categorized image included in a to-be-categorized dataset, where the to-be-categorized dataset includes at least one to-be-categorized image, the target semantic segmentation model includes a first target semantic segmentation module and a second target semantic segmentation module, the second target semantic segmentation module includes a first target task independent module, the first target task independent module has a corresponding semantic segmentation task, and the target semantic segmentation model is obtained based on the foregoing semantic segmentation model training method; performing, by the first target semantic segmentation module, fourth feature processing on the to-be-categorized image, to obtain a fourth image feature; and obtaining, by the first target task independent module in the second target semantic segmentation module, a second semantic segmentation result based on the fourth image feature.

In this way, through cooperation between the first target semantic segmentation module and the first target task independent module in the second target semantic segmentation module, the target semantic segmentation model can easily, accurately, and quickly obtain, based on a simple model structure, semantic segmentation results corresponding to different semantic segmentation tasks.

In a possible implementation of the second aspect, the fourth image feature is a multi-scale shared feature including shared features of a plurality of different scales. In this way, a more accurate semantic segmentation result can be obtained.

According to a third aspect, an implementation of this application provides a semantic segmentation model training apparatus, including a first input module, configured to input, into an initial semantic segmentation model, a first training sample image included in a first training sub-dataset, where the first training sub-dataset has a corresponding semantic segmentation task, the first training sub-dataset includes at least one first training sample image, the first training sample image includes at least one first category label, the initial semantic segmentation model includes a first initial semantic segmentation module and a second initial semantic segmentation module, the second initial semantic segmentation module includes a first initial task independent module, and the first initial task independent module has a corresponding semantic segmentation task; an initial semantic segmentation model module, configured to: perform first feature processing on the first training sample image by using the first initial semantic segmentation module in the initial semantic segmentation model included in the initial semantic segmentation model module, to obtain a first image feature; and obtain a first semantic segmentation result based on the first image feature and by using the first initial task independent module in the second initial semantic segmentation module; and a training module, configured to train the initial semantic segmentation model based on the first semantic segmentation result, to obtain a target semantic segmentation model.

According to a fourth aspect, an implementation of this application provides a semantic segmentation apparatus, including a second input module, configured to input, into a target semantic segmentation model, a to-be-categorized image included in a to-be-categorized dataset, where the to-be-categorized dataset includes at least one to-be-categorized image, the target semantic segmentation model includes a first target semantic segmentation module and a second target semantic segmentation module, the second target semantic segmentation module includes a first target task independent module, the first target task independent module has a corresponding semantic segmentation task, and the target semantic segmentation model is obtained based on the foregoing semantic segmentation model training method; and a target semantic segmentation model module, configured to: perform fourth feature processing on the to-be-categorized image by using the first target semantic segmentation module in the target semantic segmentation model included in the target semantic segmentation model module, to obtain a fourth image feature; and obtain a second semantic segmentation result based on the fourth image feature and by using the first target task independent module in the second target semantic segmentation module.

According to a fifth aspect, an implementation of this application provides a computing device cluster, including at least one computing device, where each computing device includes a processor and a memory, and the processor of the at least one computing device is configured to execute instructions stored in the memory of the at least one computing device, so that the computing device cluster performs the foregoing semantic segmentation model training method, or the computing device cluster performs the foregoing semantic segmentation method.

According to a sixth aspect, an implementation of this application provides a computer program product including instructions, where when the instructions are run by a computing device cluster, the computing device cluster is enabled to perform the foregoing semantic segmentation model training method, or the computing device cluster is enabled to perform the foregoing semantic segmentation method.

According to a seventh aspect, an implementation of this application provides a computer-readable storage medium, including computer program instructions, where when the computer program instructions are executed by a computing device cluster, the computing device cluster performs the foregoing semantic segmentation model training method, or the computing device cluster performs the foregoing semantic segmentation method.

For related beneficial effect of the third aspect to the seventh aspect, refer to the related descriptions in the first aspect or the second aspect. Details are not described herein again.

## BRIEF DESCRIPTION OF DRAWINGS

To describe technical solutions of this application more clearly, the following briefly describes accompanying drawings used in describing implementations.

FIG. 1 is a diagram of an implementation principle of a deep neural network in the conventional technology;
FIG. 2 is a diagram of another implementation principle of a deep neural network in the conventional technology;
FIG. 3 is a diagram of another implementation principle of a deep neural network in the conventional technology;
FIG. 4 is a schematic flowchart of a semantic segmentation model training method according to some implementations of this application;
FIG. 5 is a schematic flowchart of a semantic segmentation method according to some implementations of this application;

FIG. 6 is a diagram of a structure of an initial semantic segmentation model and a corresponding semantic segmentation principle according to some implementations of this application;

FIG. 7 is a diagram of a structure a backbone network 110 according to some implementations of this application;

FIG. 8 is a diagram of a process of performing feature processing by a multi-scale attention module according to some implementations of this application;

FIG. 9 is a diagram of a process of performing feature processing by an attention unit according to some implementations of this application;

FIG. 10 is a diagram of a structure of an initial semantic segmentation model and another corresponding semantic segmentation principle according to some implementations of this application;

FIG. 11 is a diagram of a structure of an initial semantic segmentation model and another corresponding semantic segmentation principle according to some implementations of this application;

FIG. 12A is a diagram of a structure of a target semantic segmentation model and a corresponding semantic segmentation principle according to some implementations of this application;

FIG. 12B is another schematic flowchart of a semantic segmentation method according to some implementations of this application;

FIG. 13 is a diagram of an application scenario of a semantic segmentation model and a semantic segmentation method according to some implementations of this application;

FIG. 14 is a diagram of a structure of a semantic segmentation model training apparatus according to some implementations of this application;

FIG. 15 is a diagram of a structure of a semantic segmentation apparatus according to some implementations of this application;

FIG. 16A and FIG. 16B are diagrams of some structures a computing device according to some embodiments of this application; and

FIG. 17A and FIG. 17B are diagrams of some structures a computing device cluster according to some embodiments of this application.

## DESCRIPTION OF EMBODIMENTS

The following further describes technical solutions of this application in detail with reference to accompanying drawings.

As described above, training of a semantic segmentation model (the semantic segmentation model may also be referred to as a semantic segmentation network, a semantic segmentation network model, a deep neural network, a deep learning network, a deep neural learning network, a deep neural network model, an image categorization model, or the like) needs to use a training dataset including a large scale of training sample images and fine category labels (the category label may also be referred to as a type label, an attribute label, or the like), and manual labeling of the category label needs to consume a large amount of manpower, financial resources, and time. Consequently, the semantic segmentation model has a problem of high training costs, especially for a pixel-level task like a semantic segmentation task. Expensive labeling costs, the large amount of manpower, financial resources, and time invested, and a long algorithm development period are unfavorable to commercial application of the semantic segmentation model.

In addition, as described above, in actual application, there are limited training sample images labeled with the category labels in the training dataset (namely, labeled data). The limited training sample images result in training overfitting of the semantic segmentation model, and make it impossible to effectively distinguish between different categories of images. This finally leads to incorrect prediction of the semantic segmentation model, affects categorization accuracy of the semantic segmentation task, and especially make multi-task categorization fail to be well implemented.

Consequently, the current semantic segmentation model has problems such as high training costs, poor accuracy, and poor multi-task categorization.

Based on development of deep learning technologies, there are also some public datasets (namely, training datasets) in the current semantic segmentation field. The datasets are usually some training sample images (which may also be referred to as image sample data or semantic segmentation data) labeled with some categories, and therefore, the datasets may be considered as partial labeled (partial label) data. In actual application, the semantic segmentation task to be implemented may change, and with the change of the semantic segmentation task to be implemented, categories may be continuously added, reduced, modified, or the like. In this case, it is difficult for the existing semantic segmentation method to adapt to the change, to perform corresponding semantic segmentation processing. For such partial labeled data, a developer usually uses some methods to resolve a problem of partial labeling of the training sample image.

The following briefly describes several methods for resolving the problem of partial labeling of the training sample image in the conventional technology, that is, briefly describes several methods for training a deep neural network (namely, a semantic segmentation model) corresponding to a semantic segmentation task in the conventional technology.

A first deep neural network training method is a method for training a single network based on full labeled data.

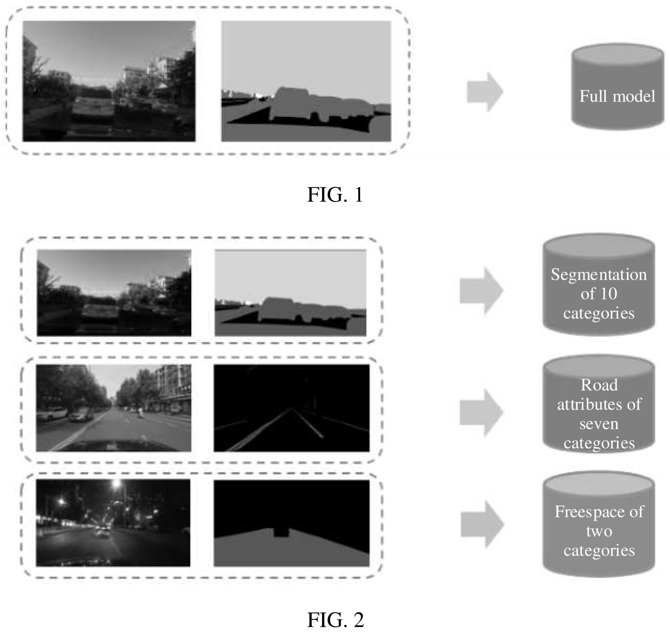

As shown in FIG. 1, in the method, for example, a training sample image that is included in an original training dataset and that is labeled with only a category of a car is partial labeled data. If categories such as the car, a road surface, and a fence need to be categorized based on a requirement of a semantic segmentation task, the categories such as the road surface and the fence need to be supplementarily labeled for the partial labeled data, to obtain full labeled data. Then, network model training is performed based on the full labeled data. In this way, a single deep neural network (namely, a full model) can be completely trained, to implement categorization of the categories such as the car, the road surface, and the fence. In addition, only one single network needs to be inferred in an inference phase (namely, an actual use phase of the model) of the deep neural network model.

In the method, the deep neural network is simple in design and is easy to train, avoiding the training problem of partial data labeling. However, the method has the following drawbacks: (1) The category of the deep neural network obtained by using the deep neural network training method has extremely poor scalability, and cannot adapt to a scenario in which a requirement of a semantic segmentation task changes, for example, cannot adapt to a scenario in which a new category needs to be added due to a change of a service requirement. For example, in the scenario in which the new category needs to be added due to the change of the service requirement, all old data needs to be re-labeled, to obtain full labeled data labeled with the required categories. Consequently, the deep neural network has poor service continuity and low efficiency. (2) In the deep neural network training method, it is difficult to handle a problem of category imbalance. For example, distribution of different categories such as a person and a car in the training sample image is imbalanced, and there are a large quantity of persons and a small quantity of cars. In this case, for the model obtained based on the method, categorization performance of the model cannot be quickly improved by labeling only a category (for example, the car) with a small amount of data.

A second deep neural network training method is a method for training a plurality of networks through data labeling, that is, training is performed by dividing a plurality of networks based on data labeling or service requirements.

As shown in FIG. 2, it is assumed that categorization of a semantic segmentation task of 10 categories (for example, segmentation of 10 categories such as a car, a pedestrian, and a fence), a road feature attribute task of seven categories (for example, a lane line and a ground identifier), and freespace (freespace) task of two categories (for example, freespace and non-freespace) needs to be implemented in a service. In this case, a separate network is trained for each semantic segmentation task based on labeled data (namely, a training dataset) respectively corresponding to the semantic segmentation task of 10 categories, the road feature attribute task of seven categories, and the freespace task of two categories, independent training and inference are performed, and a plurality of networks are deployed. To be specific, a deep neural network used to implement the semantic segmentation task of 10 categories is trained and deployed based on the training dataset labeled with the 10 semantic segmentation categories, a deep neural network used to implement the road feature attribute task of seven categories is trained and deployed based on the training dataset labeled with the seven road feature attribute categories, and a deep neural network used to implement the freespace task of two categories is trained and deployed based on the training dataset labeled with two freespace categories. Then, the corresponding semantic segmentation tasks are respectively implemented based on the three deep neural networks.

In the method, training and inference of the deep neural network are simple, avoiding the problem of partial data labeling, and the method can resolve the problem of category imbalance. However, the method has the following drawbacks: (1) Because there are a large quantity of networks, network parameters, a computing amount, and an inference delay increase exponentially as a quantity of tasks increases, which is not conducive to deployment on a device. (2) For a single task, labeled data of another task cannot be used to learn a feature with better robustness.

A third deep neural network training method is a method for continuously adjusting a trained category in an incremental learning manner.

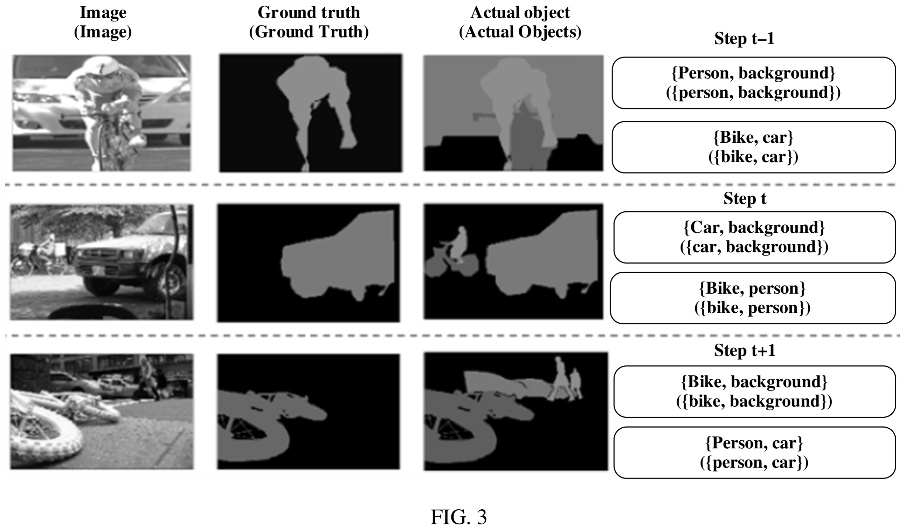

As shown in FIG. 3, for different images (Image), a training method shown in FIG. 3 is first adding a category "person" to specially train the category "person (person)" (namely, Step t-1), then adding a category "car (car)" to specially train the category "car" (namely, Step t), and finally adding a category "bike (bike)" to specially train the category "bike" (namely, Step t+1). It is expected that a finally trained model can well segment the three categories of objects: "person", "car", and "bike".

In the method, a deep neural network model of all categories can be well trained based on the partial labeled data. However, the method has the following drawbacks: (1) Processes in different training stages are ambiguous. For example, when the person is trained, a ground truth (Ground Truth) is expected to be the person, but actual objects (Actual Objects) may include the car. In this case, the car is suppressed by the network. As a result, the model is ambiguous and training is prone to fail. (2) There is a serious forgetting problem, that is, a previously trained category in a later training stage is easily forgotten.

In conclusion, the existing deep neural network model training methods have the foregoing different problems.

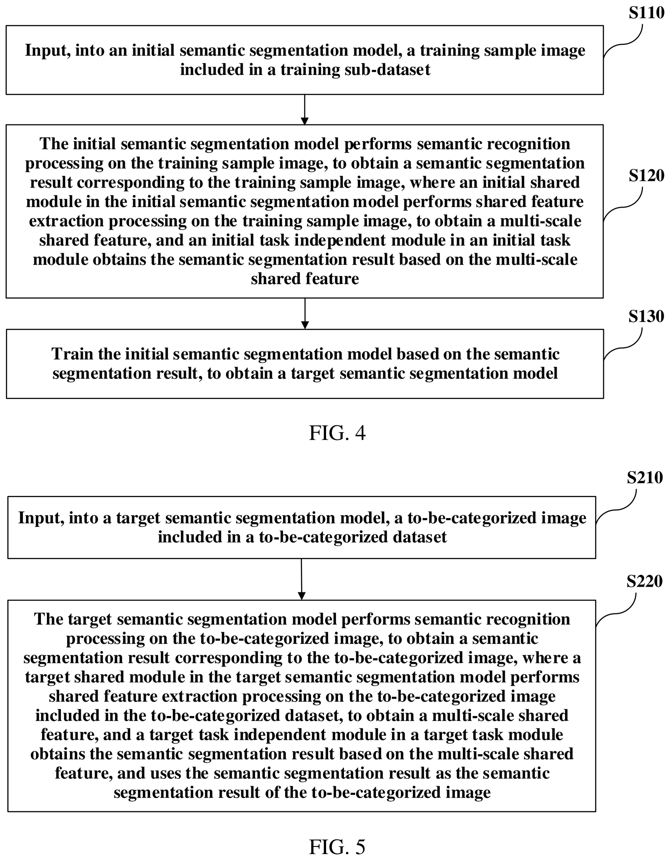

In view of this, an implementation of this application provides a semantic segmentation model training method, applied to an electronic device. As shown in FIG. 4, the semantic segmentation model training method includes the following steps.

S110: Input, into an initial semantic segmentation model, a training sample image included in a training sub-dataset.

In actual application, training datasets corresponding to different semantic segmentation tasks may be selected based on the semantic segmentation tasks that need to be implemented. Therefore, in this implementation, the training dataset includes at least one training sub-dataset (for example, n training sub-datasets, where n is greater than or equal to 1), each training sub-dataset has a corresponding semantic segmentation task (for example, there are n semantic segmentation tasks, where n is greater than or equal to 1), each training sub-dataset includes at least one training sample image, and each sample image includes at least one category label.

For example, it is assumed that categorization of the three tasks, namely, the semantic segmentation task of 10 categories (as an example of a first semantic segmentation task), the road feature attribute task of seven categories (as an example of a second semantic segmentation task), and the freespace task of two categories (as an example of a third semantic segmentation task) needs to be implemented in a service. In this case, a dataset that can implement the semantic segmentation task of 10 categories (that is, a dataset labeled with the 10 semantic segmentation categories (as an example of a first category label) is used as an example of a first training sub-dataset), a training dataset that can implement the road feature attribute task of seven categories (that is, a dataset labeled with the seven road feature categories (as an example of a second category label) is used as an example of a second training sub-dataset), and a training dataset that can implement the freespace task of two categories (that is, a dataset labeled with the two freespace categories (as an example of a third category label) is used as an example of a third training sub-dataset) are separately used as the training sub-dataset, and are used together as the training dataset. In other words, the training sub-datasets correspond to different semantic segmentation tasks.

The initial semantic segmentation model includes an initial shared module (as an example of a first initial semantic segmentation module) and an initial task module (as an example of a second initial semantic segmentation module). The initial task module includes at least one initial task independent module, and different initial task independent modules correspond to different semantic segmentation tasks.

For example, the initial task module includes a first initial task independent module, and the first initial task independent module corresponds to the semantic segmentation task of 10 categories. In addition, the initial task module may further include a second initial task independent module and a third initial task independent module. The second initial task independent module corresponds to the road feature attribute task of seven categories, and the third initial task independent module corresponds to the freespace task of two categories.

S 120: The initial semantic segmentation model performs semantic recognition processing on the training sample image, to obtain a semantic segmentation result (namely, a first semantic segmentation result) corresponding to the training sample image.

The initial shared module in the initial semantic segmentation model performs shared feature extraction processing (as an example of first feature processing) on the training sample image, to obtain a multi-scale shared feature (as an example of a first image feature), and inputs the multi-scale shared feature into the initial task module. The shared feature may be, for example, some features of different scales that have good robustness to each semantic segmentation task, and may be selected and set based on a semantic segmentation task that needs to be implemented.

The initial task independent module in the initial task module obtains the semantic segmentation result based on the multi-scale shared feature.

S130: Train the initial semantic segmentation model based on the semantic segmentation result, to obtain a target semantic segmentation model.

For example, an initial task independent module corresponding to each semantic segmentation task is trained based on a semantic segmentation result corresponding to each semantic segmentation task, to obtain a corresponding target task independent module, so as to obtain a target task module (as an example of a second target semantic segmentation module). The initial shared module is trained based on the semantic segmentation result corresponding to each semantic segmentation task, to obtain a target shared module (as an example of a first target semantic segmentation module), to obtain the target semantic segmentation model.

In the semantic segmentation model training method provided in this implementation, the initial semantic segmentation model is a network structure including the initial shared module and the initial task module, the initial task module includes one initial task independent module corresponding to a semantic segmentation task or includes a plurality of initial task independent modules corresponding to different semantic segmentation tasks, and the initial shared module is shared by the initial task independent modules, to implement extraction of the multi-scale shared feature. Based on a design of the initial semantic segmentation model, in a process of training the semantic segmentation model, the initial semantic segmentation model is trained based on training sub-datasets corresponding to different semantic segmentation tasks (namely, partial labeled data corresponding to different semantic segmentation tasks), to obtain the corresponding target semantic segmentation model. The initial shared module extracts the multi-scale shared features from the training sample images, and inputs the multi-scale shared features into the initial task module. The initial task independent module in the initial task module obtains the semantic segmentation results of the corresponding semantic segmentation tasks based on the multi-scale shared features.

In this way, in the semantic segmentation model training method provided in this implementation, the semantic segmentation model can be trained based on the partial label training dataset, to obtain the target semantic segmentation model, and a problem of partial labeling of the training dataset is avoided, that is, the semantic segmentation model can be trained without supplementarily labeling the partial labeled data. This effectively reduces training costs of the model, efficiently uses the partial labeled data, and improves utilization of the partial labeled data. In addition, the semantic segmentation model of all categories required by the semantic segmentation task can be obtained through training in a scenario with restricted computing power of the electronic device and the partial labeled data. In other words, the semantic segmentation model is obtained, where precision of the semantic segmentation model reaches or exceeds that of a semantic segmentation model that corresponds to a single semantic segmentation task and that is obtained based on partial labeled data.

In addition, in the semantic segmentation model training method provided in this implementation, the initial semantic segmentation model and the obtained target semantic segmentation model are simple in network structure and are easy to train. This effectively reduces the training costs of the model, has a small network parameter, a small computing amount, and the like, and is applicable to arrangement on the device. In addition, there are no problems such as ambiguity and serious forgetting in the training process.

In addition, in this implementation, in the process of training the semantic segmentation model, more features can be used for model training based on the multi-scale shared feature, and a feature with better robustness can be learned. This can better resolve the problem of category imbalance, and effectively improves accuracy of the obtained semantic segmentation model.

Further, in this implementation, different semantic segmentation tasks share the shared module, and have independent task independent modules. In actual application, if a requirement of a semantic segmentation task changes, only a corresponding task independent module needs to be modified (for example, a new task independent module is added or a task independent module is deleted), and another module like the shared module does not need to be modified. Further, only the modified task independent module and the shared module need to be trained. Therefore, only a small quantity of model parameters of the task independent module need to be correspondingly modified. In this way, the semantic segmentation model can be adjusted by adding, deleting, or modifying the small quantity of parameters, to implement a corresponding new semantic segmentation task. This effectively reduces maintenance and training costs of the semantic segmentation model.

Further, in this implementation, in the process of training the semantic segmentation model, training the initial semantic segmentation model based on the semantic segmentation result may be updating (that is, training) the corresponding task independent module based on the semantic segmentation result corresponding to each semantic segmentation task, and updating (that is, training) the shared module based on the semantic segmentation result corresponding to each semantic segmentation task. In this way, the semantic segmentation result corresponding to each semantic segmentation task is used only to update (that is, train) the corresponding task independent module, and the semantic segmentation result corresponding to each semantic segmentation task is also used to update (that is, train) the shared module. In this way, the shared module can learn the knowledge of different semantic segmentation tasks, and learn the more shared feature, and for each semantic segmentation task, only the independent task independent module part is updated (that is, trained), to ensure that the feature learned by the part is unique to the task. In this way, the accuracy of the semantic segmentation model can be effectively improved.

An implementation of this application further provides a semantic segmentation method, applied to an electronic device. As shown in FIG. 5, the semantic segmentation method includes the following steps.

S210: Input, into a target semantic segmentation model, a to-be-categorized image included in a to-be-categorized dataset.

The to-be-categorized dataset includes at least one to-be-categorized image, the target semantic segmentation model is obtained based on the foregoing semantic segmentation model training method, the target semantic segmentation model includes a target shared module and a target task module, the target task module includes at least one target task independent module (for example, includes a first target task independent module), and each target task independent module corresponds to a different semantic segmentation task.

In addition, the to-be-categorized dataset may alternatively include at least one to-be-categorized sub-dataset, and each to-be-categorized sub-dataset includes at least one to-be-categorized image.

S220: The target semantic segmentation model performs semantic recognition processing on the to-be-categorized image, to obtain a semantic segmentation result (namely, a second semantic segmentation result) corresponding to the to-be-categorized dataset.

The target shared module in the target semantic segmentation model performs shared feature extraction processing (as an example of fourth feature processing) on the to-be-categorized image included in the to-be-categorized dataset, to obtain a multi-scale shared feature (as an example of a fourth image feature), and inputs the multi-scale shared feature into the target task module.

The target task independent module (for example, a first target task independent module) in the target task module obtains the semantic segmentation result based on the multi-scale shared feature, and uses the semantic segmentation result as the semantic segmentation result of the to-be-categorized image.

In this way, through cooperation between the target shared module and the target task independent module in the target task module, the target semantic segmentation model can easily, accurately, and quickly obtain semantic segmentation results corresponding to different semantic segmentation tasks.

The following further describes the semantic segmentation model training method provided in the implementations of this application.

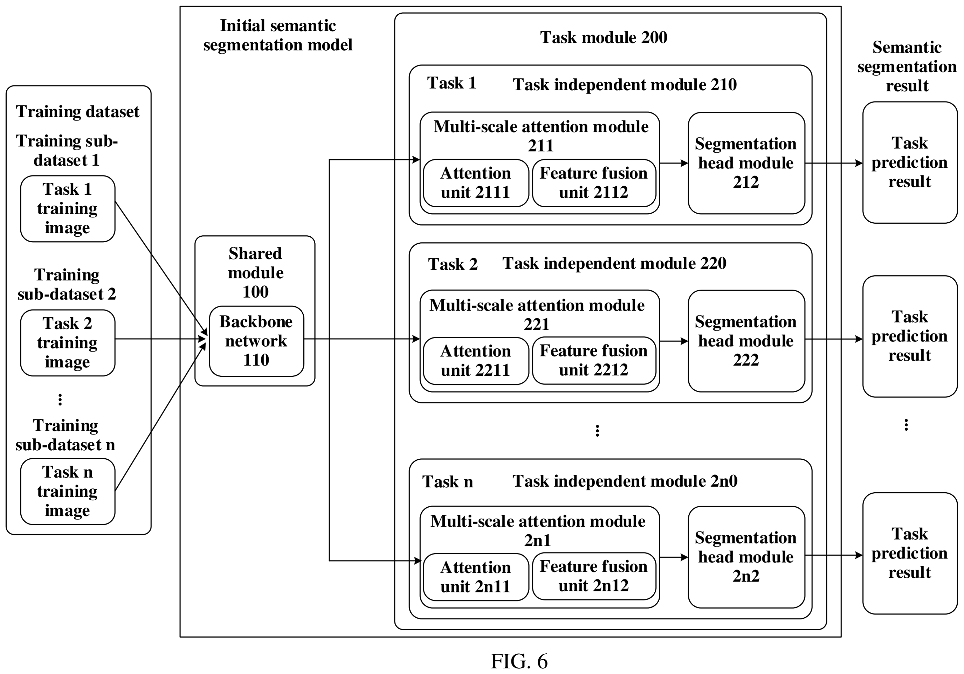

As shown in FIG. 6, the initial semantic segmentation model provided in the implementations of this application includes a shared module 100 (namely, an initial shared module) and a task module 200 (namely, an initial task module, which may include a plurality of task independent modules).

The shared module 100 includes a backbone (Backbone) network 110, which may also be referred to as a backbone module. The shared module 100 is a shared module of the entire semantic segmentation model, and is configured to extract a shared feature expression of different semantic segmentation tasks, for example, configured to extract a multi-scale shared feature of shared features of a plurality of different scales. In other words, the backbone network 110 is configured to process an input image of an actual scenario, to obtain a shared visual feature and transfer the shared visual feature to a subsequent multi-scale attention module.

The task module 200 includes a plurality of task independent modules (namely, initial task independent modules) such as a task independent module 210, a task independent module 220, and a task independent module 2n0. The task independent module 210 corresponds to a task 1, the task independent module 220 corresponds to a task 2, and the task independent module 2n0 corresponds to a task n.

Each task independent module includes a multi-scale attention module (Multi-Scale Attention Module, MSAM) (as an example of a first initial processing submodule) and a segmentation head (head) module (as an example of a second initial processing submodule). For example, the task independent module 210 includes a multi-scale attention module 211 and a segmentation head module 212, the task independent module 220 includes a multi-scale attention module 221 and a segmentation head module 222, the task independent module 2n0 includes a multi-scale attention module 2n1 and a segmentation head module 2n2.

Each task independent module is independently used by each semantic segmentation task. To be specific, different semantic segmentation tasks each have an independent multi-scale attention module and segmentation head module, and are configured to: extract a feature expression related to each task, and generate an output result of each task as a task prediction result. A quantity of task independent modules is related to a quantity of tasks. Each time a task is added, an independent task independent module needs to be added, that is, a group of modules: a multi-scale attention module and a segmentation head module need to be added.

In addition, each multi-scale attention module is also independently used by each semantic segmentation task, and the multi-scale attention module is configured to adaptively activate, based on an attention mechanism, features of different scales required by each semantic segmentation task. For example, the multi-scale attention module is configured to perform feature fusion processing (as an example of second feature processing) such as weighted fusion on the multi-scale shared feature extracted by the backbone network 110, to obtain a unified single-scale feature (namely, a single-scale feature, which is used as an example of a second image feature) related to the semantic segmentation task, and input the single-scale feature into the segmentation head module.

In addition, each multi-scale attention module includes at least one attention (attention) unit (for example, an attention unit 2111, an attention unit 2211, and an attention unit 2n11 shown in FIG. 6), and the attention unit is configured to perform feature enhancement processing on a feature.

In addition, each multi-scale attention module further includes a feature fusion unit (for example, a feature fusion unit 2112, a feature fusion unit 2212, and a feature fusion unit 2n12 shown in FIG. 6), configured to perform feature fusion processing such as upsampling and addition on a multi-scale shared feature obtained after the attention unit performs feature enhancement processing.

The segmentation head module is configured to: perform feature processing such as convolution and upsampling or scale adjustment processing (as an example of third feature processing) on the single-scale feature that is related to the task and that is extracted by the multi-scale attention module, to obtain, for example, an image that has a same resolution (namely, a same scale) as that of an input image (namely, a corresponding training sample image) and has a scale different from that of the single-scale feature (namely, a single-scale feature, which is used as an example of a third image feature), so as to obtain an output prediction result of each task as a semantic segmentation result.

Based on the initial semantic segmentation model, in a process of training the semantic segmentation model, a multi-scale shared feature extraction procedure may be as follows:

In the process of training the semantic segmentation model, as shown in FIG. 6, task training images (namely, training sample images) in a plurality of training sub-datasets included in a training dataset are first input into the shared module 100.

For example, training images used for training different tasks are first input into the shared module 100, and the tasks are a task 1 training image (as an example of a first training sample image) that is in a training sub-dataset 1 (as an example of a first training sub-dataset) included in the training dataset and that corresponds to the task 1 (as an example of a first semantic segmentation task), a task 2 training image (as an example of a second training sample image) that is in a training sub-dataset 2 (as an example of a second training sub-dataset) and that corresponds to the task 2 (as an example of a second semantic segmentation task), and a task n training image (as an example of an $n^{th}$ training sample image) that is in a training sub-dataset n (as an example of an $n^{th}$ training sub-dataset) and that corresponds to the task n (as an example of an $n^{th}$ semantic segmentation task).

The training dataset includes a plurality of training sub-datasets corresponding to different semantic segmentation tasks, and each training sub-dataset may be a partially labeled dataset. Certainly, an open-source dataset may alternatively be selected as the training sub-dataset based on a requirement.

The backbone network 110 in the shared module 100 is mainly configured to extract shared visual features from the input images of the plurality of tasks, that is, configured to perform shared visual feature extraction on each task training image, to obtain the multi-scale shared feature.

In this implementation, because the task independent modules share the backbone network 110, and an operation of extracting the multi-scale shared feature by the backbone network 110 is unrelated to a task type, the multi-scale shared feature unrelated to the task may be extracted.

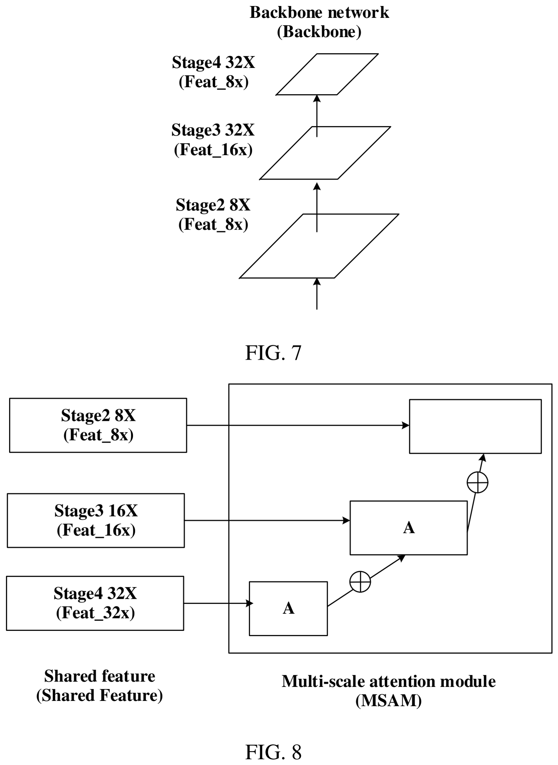

For example, the backbone network 110 performs convolutional processing (namely, shared feature extraction processing) on the input image, to obtain a multi-scale shared feature of different scales of the input image. For example, as shown in FIG. 7, the backbone network 110 performs convolutional processing on the input image, to obtain an 8-fold downsampled feature Feat_8x (namely, Stage2 8X), a 16-fold downsampled feature Feat_16x (namely, Stage3 16X), and a 32-fold downsampled feature Feat_32x (namely, Stage4 32X). The three feature expressions of different scales are used as the multi-scale shared feature. Certainly, the backbone network 110 may alternatively obtain another type of multi-scale shared feature.

In this implementation, the backbone network 110 may use a plurality of architectures, for example, a residual network (Residual Neural Network, ResNet), a MobileNet, and an EfficientNet. The backbone network 110 may alternatively be a convolutional neural network (Convolutional Neural Network, CNN).

In addition, a weight of the backbone network 110 may be obtained by performing pre-training on the semantically segmented dataset.

In an implementation of this application, after obtaining the multi-scale shared feature corresponding to each task training image, the backbone network 110 in the shared module 100 may separately input the obtained multi-scale shared feature into each task independent module in the task module 200, and each task independent module in the task module 200 obtains the corresponding semantic segmentation result based on the multi-scale shared feature.

For example, the backbone network 110 in the shared module 100 obtains the multi-scale shared feature corresponding to the task 1 training image, the multi-scale shared feature corresponding to the task 2 training image, and the multi-scale image feature corresponding to the task n training image, and the multi-scale shared features are all input into the multi-scale attention module 211 in the task independent module 210, the multi-scale attention module 221 in the task independent module 220, and the multi-scale attention module 2n1 in the task independent module 2n0 respectively.

That the task independent modules in the task module 200 obtain the semantic segmentation results based on the multi-scale shared features may be that the task independent modules perform feature fusion processing and result prediction processing on received multi-scale shared features corresponding to different semantic segmentation tasks, to obtain prediction results corresponding to different semantic segmentation tasks as the semantic segmentation results.

For example, a task prediction result obtained by the task independent module 210 includes a task 1 prediction result, a task 2 prediction result, and a task n prediction result, a task prediction result obtained by the task independent module 220 includes the task 1 prediction result, the task 2 prediction result, and the task n prediction result, a task prediction result obtained by the task independent module 2n0 includes the task 1 prediction result, the task 2 prediction result, and the task n prediction result.

For example, a procedure in which the task independent module obtains the semantic segmentation result may be described as follows:

The multi-scale attention module in each task independent module first obtains, based on the multi-scale shared feature, the single-scale feature related to the task.

For example, the multi-scale attention module 211 obtains, based on the multi-scale shared feature corresponding to the task 1 training image, the multi-scale shared feature corresponding to the task 2 training image, and the multi-scale shared feature corresponding to the task n training image, the single-scale feature corresponding to the task 1, the single-scale feature corresponding to the task 2, and the single-scale feature corresponding to the task n. The multi-scale attention module 221 obtains, based on the multi-scale shared feature corresponding to the task 1 training image, the multi-scale shared feature corresponding to the task 2 training image, and the multi-scale shared feature corresponding to the task n training image, the single-scale feature corresponding to the task 1, the single-scale feature corresponding to the task 2, and the single-scale feature corresponding to the task n. The multi-scale attention module 2n1 obtains, based on the multi-scale shared feature corresponding to the task 1 training image, the multi-scale shared feature corresponding to the task 2 training image, and the multi-scale shared feature corresponding to the task n training image, the single-scale feature corresponding to the task 1, the single-scale feature corresponding to the task 2, and the single-scale feature corresponding to the task n.

A process in which each multi-scale attention module obtains the single-scale feature based on the multi-scale shared feature may be described as follows: For example, as shown in FIG. 8, the multi-scale attention module first performs, by using an attention unit, feature enhancement processing on a 32-fold downsampled feature Feat_32x that corresponds to a task and that is sent by the backbone network 110, inputs the processed feature into the feature fusion unit for upsampling (as shown in A in FIG. 8), to obtain a 16-fold downsampled feature Feat_16x', then adds the 16-fold downsampled feature Feat_16x' and a 16-fold downsampled feature Feat_16x sent by the backbone network 110, to obtain a 16-fold downsampled feature Feat_16x". Then, upsampling is performed on the 16-fold downsampled feature Feat_16x", to obtain an 8-fold downsampled feature Feat_8x'. Finally, the 8-fold downsampled feature Feat_8x' and an 8-fold downsampled feature Feat_8x sent by the backbone network 110 are added, to obtain an 8-fold downsampled feature Feat_8x" used as a feature finally obtained through multi-scale fusion, namely, the single-scale feature (as an example in which processing such as upsampling and addition is used as the feature fusion processing).

To be specific, a process of performing feature fusion processing on the multi-scale shared feature to obtain the single-scale feature (namely, a fusion feature) is as follows:

$$\text{Fusion\_feat (fusion feature)} = (\text{up}(A2*(\text{up}(A1*\text{Feat\_32x}) + \text{Feat\_16x})) + \text{Feat\_8x})$$

Certainly, in some other implementations of this application, the multi-scale attention module may alternatively obtain the corresponding single-scale feature in another manner.

In this implementation, the multi-scale attention module may use a plurality of different structures, for example, a structure based on an attention mechanism like SE (Squeeze-and-Excitation), CBAM (Convolutional Block Attention Module), or Non_local.

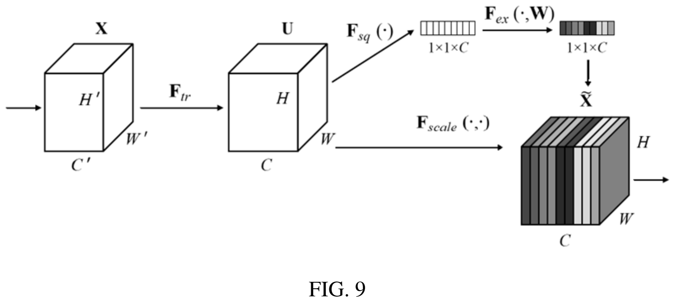

In addition, in this implementation, the attention unit includes an attention function module in a channel (channel) dimension. For example, as shown in FIG. 9, $F_{tr}$ is a conventional convolutional structure, and X and U are an input (H'*W'*C') and an output (H*W*C) of $F_{tr}$. For a feature of a scale H*W*C, a dimension of H*W is reduced to one dimension through global average pooling (namely, $F_{sq}()$ processing), and a dimension of C is retained to obtain a 1 x 1 × C feature. Then, corresponding processing is performed at a full connection (Full Connection, FC) layer (performing $F_{ex}()$ processing), a rectified linear unit (Rectified Linear Unit, ReLU) layer, and the FC layer. Finally, activation is performed according to, for example, a sigmoid function, to obtain a corresponding value, and the value as a scale is multiplied by a C channel of U (namely, $F_{scale}$ processing), to obtain input data ($\tilde{X}$) of a next level, namely, the image feature obtained through the feature enhancement processing.

Then, the multi-scale attention module in each task independent module inputs the obtained single-scale feature into the corresponding segmentation head module, and the segmentation head module obtains the corresponding task prediction result based on the single-scale feature, that is, obtains the corresponding semantic segmentation result.

A procedure in which the segmentation head module obtains the semantic segmentation result based on the single-scale feature may be described as follows:

For example, the segmentation head module may include two convolutional processing modules (that is, two-layer convolution operations). The first convolutional processing module is configured to further obtain, based on the single-scale feature, a feature related to the task (for example, further obtain a new single-scale feature as an example of the third feature processing). The second convolutional processing module is configured to generate, based on a final single-scale feature (as an example of the third image feature), logits corresponding to categories (logit is a feature vector corresponding to category probability computation, an output of a last layer of a network (namely, an output of a last full connection layer of the network), or the like), may obtain probability values corresponding to different categories after logits are processed according to a softmax function, and directly select an index (namely, a category) with a maximum probability value (argmax), to obtain a corresponding category (namely, the semantic segmentation result).

A process in which the segmentation head module determines the semantic segmentation result through computation is as follows:

$$C \text{ (semantic segmentation result)} = \text{argmax (softmax(logits))}$$

In this way, each segmentation head module can obtain the corresponding semantic segmentation result. For example, the segmentation head module 212 obtains the semantic segmentation result of the task 1 (namely, the task 1 prediction result), the semantic segmentation result of the task 2 (namely, the task 2 prediction result), and the semantic segmentation result of the task n (namely, the task n prediction result). The segmentation head module 222 obtains the semantic segmentation result of the task 1, the semantic segmentation result of the task 2, and the semantic segmentation result of the task n. The segmentation head module 2n2 obtains the semantic segmentation result of the task 1, the semantic segmentation result of the task 2, and the semantic segmentation result of the task n.

In this implementation, after the prediction results of the semantic segmentation tasks are obtained, the shared module 100 is trained by using the prediction results of different semantic segmentation tasks (for example, the shared module 100 is separately trained by using the semantic segmentation result of the task 1, the semantic segmentation result of the task 2, and the semantic segmentation result of the task n). In addition, the corresponding task independent modules in the task module 200 are trained by using the prediction results of different semantic segmentation tasks (for example, the multi-scale attention module 211 and the segmentation head module 212 in the task independent module 210 are trained by using the semantic segmentation result of the task 1, to obtain a corresponding target task independent module 210' (as an example of a first target task independent module); the multi-scale attention module 221 and the segmentation head module 222 in the task independent module 220 are trained by using the semantic segmentation result of the task 2, to obtain a corresponding target task independent module 220' (as an example of a second target task independent module); and the multi-scale attention module 2n1 and the segmentation head module 2n2 in the task independent module 2n0 are trained by using the semantic segmentation result of the task n, to obtain a corresponding target task independent module 2n0' (as an example of an $n^{th}$ target task independent module)), until a training termination condition is met, to obtain a trained target semantic segmentation model. For example, the training termination condition may be that target loss functions of the shared module 100 and the task independent module in the task module 200 converge or reach a preset quantity of iterations. The target loss function and a convergence condition or a quantity of iterations of the target loss function may be specifically set based on a requirement. This is not specifically limited in this application.

In other words, in this implementation, when the corresponding task independent modules in the task module 200 are subsequently trained based on the prediction results of different semantic segmentation tasks, the following is performed: For example, the task 1 prediction result corresponding to the semantic segmentation task of the task independent module 210 is selected from prediction results obtained by the task independent module 210, to perform candidate training on the task independent module 210. Another prediction result obtained by the task independent module 210 only needs to be used for training of another corresponding task independent module.

Certainly, in this implementation, when the corresponding task independent modules in the task module 200 are subsequently trained based on the prediction results of different semantic segmentation tasks, for example, only a loss of an output result of a training image of each semantic segmentation task is computed, losses of all remaining tasks are set to 0. In this way, the corresponding task independent modules in the task module 200 are trained by using the prediction results of different semantic segmentation tasks.

In this way, the semantic segmentation result corresponding to each semantic segmentation task is used only to train the corresponding task independent module, and the semantic segmentation result corresponding to each semantic segmentation task is also used to train the shared module. In this way, the shared module can learn knowledge of different semantic segmentation tasks, and learn a more shared feature, and for each semantic segmentation task, only the independent task independent module part is trained, to ensure that a feature learned by the part is unique to the task. In this way, accuracy of the semantic segmentation model can be effectively improved.

In the semantic segmentation model training method provided in the implementations of this application, a multi-task semantic segmentation network framework is provided in which the shared feature is extracted for different semantic segmentation tasks over the shared backbone network, and then the feature related to the semantic segmentation task is extracted based on the shared feature and by using the independent multi-scale attention module and segmentation head, to integrate the plurality of semantic segmentation tasks into one network.

All the training sample images in the training dataset are partial labeled data, that is, each image is labeled with a single task. Therefore, to simultaneously train the plurality of semantic segmentation tasks, the network inputs the images of the plurality of semantic segmentation tasks, and after shared feature extraction is performed on the input image over the backbone network 110 in the shared module 100, the features related to different semantic segmentation tasks are extracted by using different multi-scale attention modules and segmentation heads, and the prediction results (namely, the semantic segmentation results) are output. Subsequently, in the model training process, for the network prediction results, for example, only the loss of the output result of the training image of each semantic segmentation task is computed, and the losses of all the remaining tasks are set to 0. In this way, each task only updates (that is, trains) the multi-scale attention module and the segmentation head part of the task, and each task also updates (that is, trains) the backbone network 110. In this way, the backbone network 110 can learn the knowledge of different tasks, and learn the more shared feature, and for each task, only the independent task independent module part is updated, to ensure that the feature learned by the part is unique to the task. In this way, accuracy of semantic segmentation can be effectively improved.

In addition, in the semantic segmentation model training method provided in this implementation, a unified shared backbone network is used for different semantic segmentation tasks, to extract the shared feature unrelated to the semantic segmentation task, and the multi-scale attention module and the segmentation head that are independently provided for each semantic segmentation task extract the feature related to the semantic segmentation task, so that the plurality of semantic segmentation tasks can be integrated into one network and a delay is greatly reduced. Moreover, sharing the shared feature by the plurality of tasks can improve model precision. In addition, data of an original single semantic segmentation task can be fully used, and no additional labeling is required. This greatly reduces labeling costs.

In other words, in the semantic segmentation model training method provided in this implementation, the general backbone network is shared, and the multi-scale attention module and the segmentation head are independently set for different semantic segmentation tasks. This effectively resolves the problem of the exponential delay increase caused by the plurality of models in the second method, and the data labeling problem of the single model in the first method. In addition, the plurality of semantic segmentation tasks share the shared feature, so that the model precision can be further improved.

Further, based on the semantic segmentation model training method provided in this implementation, if a requirement of a semantic segmentation task changes, only a corresponding task independent module needs to be changed based on the requirement. For example, each time a semantic segmentation task is added, a task independent module is added, to be specific, a group of modules: a multi-scale attention module and a segmentation head are added. Each time a semantic segmentation task is reduced, a task independent module is deleted, to be specific, a group of modules: a multi-scale attention module and a segmentation head are deleted. The backbone network 110 does not need to be modified. Therefore, only a small quantity of model parameters of the task independent module part need to be correspondingly modified. This effectively reduces training costs and shortens a training period of the semantic segmentation model. Therefore, the semantic segmentation model training method may be better applicable to a scenario in which the requirement of the semantic segmentation task changes.

In addition, the backbone network is simultaneously optimized by using the semantic segmentation results of the semantic segmentation tasks, the independent multi-scale attention module and segmentation head of each task are independently optimized by using the semantic segmentation result of the corresponding semantic segmentation task, and the two are not coupled to each other. This effectively improves model training efficiency and model accuracy.

In addition, the independent multi-scale attention module of each semantic segmentation task provided in this implementation of this application can adaptively extract the features of different scales required by each task.

In this way, the semantic segmentation model of all categories can be trained in a scenario with restricted computing power of a device and the partial labeled data, and categorization precision of the semantic segmentation model can reach or exceed that of a single semantic segmentation obtained in a partial labeling manner.

In addition, in the semantic segmentation model training method provided in this implementation, with drawbacks of an existing method and limitations of an actual application scenario considered, a shared and unified backbone network is provided in which different semantic segmentation tasks have independent multi-scale attention modules and segmentation heads, a plurality of segmentation tasks can be completed with only a small quantity of parameters added, and partial labeled data can be efficiently used. Each semantic segmentation task only updates the corresponding segmentation head and the shared backbone network, to resolve the problem of partial labeling. In addition, compared with those of a plurality of networks, a quantity of parameters and a computing amount of one network can be greatly reduced.

In addition, in the semantic segmentation model training method provided in this implementation, for a feature that the semantic segmentation task requires fusion of a high-layer semantic feature and bottom-layer detail information, an independent multi-scale attention module is designed for each segmentation head module. To be specific, the independent multi-scale attention module of each semantic segmentation task adaptively activates features of different scales required by each task. This effectively improves segmentation effect of each task.

In another implementation of this application, after the multi-scale attention module included in each task independent module in the task module 200 receives the multi-scale shared feature sent by the backbone network 110 in the shared module 100, each multi-scale attention module may alternatively first select, from the multi-scale shared feature, a target multi-scale shared feature corresponding to the semantic segmentation task corresponding to the task independent module.

For example, the multi-scale attention module 211 selects, from the multi-scale shared feature corresponding to the task 1 training image, the multi-scale shared feature corresponding to the task 2 training image, and the multi-scale shared feature corresponding to the task n training image based on the semantic segmentation task (namely, the task 1) corresponding to the multi-scale attention module 211, a target multi-scale shared feature corresponding to the task 1. The multi-scale attention module 221 selects, from the multi-scale shared feature corresponding to the task 1 training image, the multi-scale shared feature corresponding to the task 2 training image, and the multi-scale shared feature corresponding to the task n training image based on the semantic segmentation task (namely, the task 2) corresponding to the multi-scale attention module 221, a target multi-scale shared feature corresponding to the task 2. The multi-scale attention module 2n1 selects, from the multi-scale shared feature corresponding to the task 1 training image, the multi-scale shared feature corresponding to the task 2 training image, and the multi-scale shared feature corresponding to the task n training

**EP 4 654 151 A1**

image based on the semantic segmentation task (namely, the task n) corresponding to the multi-scale attention module 2n1, a target multi-scale shared feature corresponding to the task n.

That the multi-scale attention module in each task independent module selects, based on the semantic segmentation task corresponding to the task independent module, the target multi-scale shared feature corresponding to the semantic segmentation task may be implemented based on a task supervision capability of the network.

Then, each multi-scale attention module performs feature fusion processing on the selected target multi-scale shared feature, to obtain the corresponding single-scale feature, and inputs the single-scale feature into the corresponding segmentation head module. The segmentation head module obtains the corresponding semantic segmentation result.

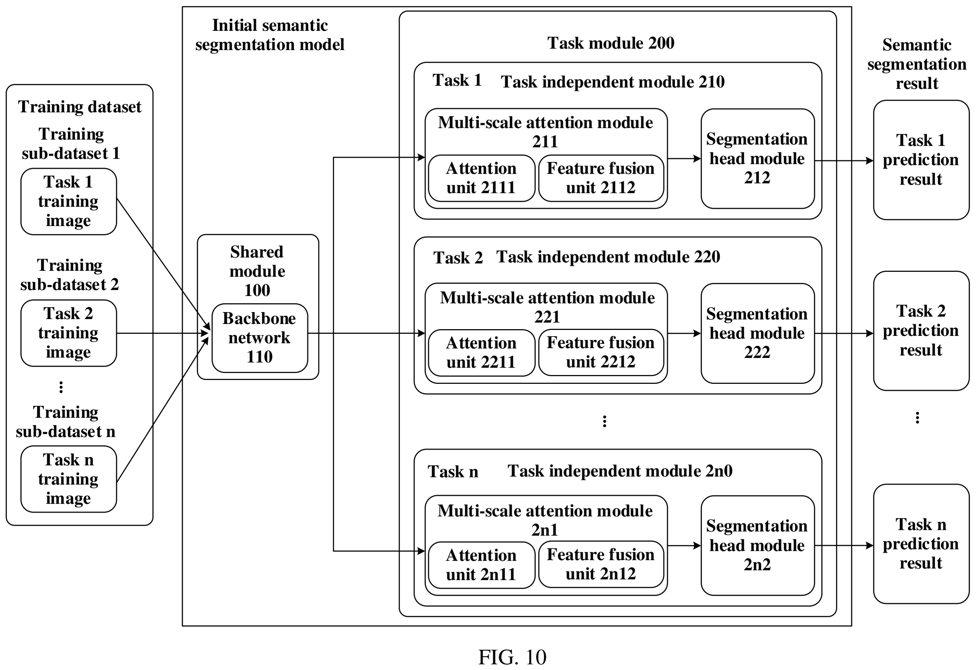

In this implementation, each multi-scale attention module performs feature fusion processing on the multi-scale feature corresponding to the semantic segmentation task corresponding to the multi-scale attention module, to obtain the single-scale feature. Therefore, each segmentation head module obtains the semantic segmentation result corresponding to the semantic segmentation task corresponding to the segmentation head module. For example, as shown in FIG. 10, the segmentation head module 212 obtains the semantic segmentation result of the task 1 (namely, the task 1 prediction result), the segmentation head module 222 obtains the semantic segmentation result of the task 2 (namely, the task 2 prediction result), and the segmentation head module 2n2 obtains the semantic segmentation result of the task n (namely, the task n prediction result).

In other words, in this implementation, the task independent module corresponding to each semantic segmentation task performs further feature extraction and semantic segmentation result prediction processing on the task training image included in the training sub-dataset that has the same semantic segmentation task, to obtain the corresponding semantic segmentation result.

In this implementation, after the prediction results of the semantic segmentation tasks are obtained, the shared module 100 is trained by using the prediction results of different semantic segmentation tasks (for example, the shared module 100 is separately trained by using the semantic segmentation result of the task 1, the semantic segmentation result of the task 2, and the semantic segmentation result of the task n). In addition, the corresponding task independent modules in the task module 200 are trained by using the prediction results of different semantic segmentation tasks (for example, the multi-scale attention module 211 and the segmentation head module 212 in the task independent module 210 are trained by using the semantic segmentation result of the task 1, the multi-scale attention module 221 and the segmentation head module 222 in the task independent module 220 are trained by using the semantic segmentation result of the task 2, and the multi-scale attention module 2n1 and the segmentation head module 2n2 in the task independent module 2n0 are trained by using the semantic segmentation result of the task n), until the training termination condition is met, to obtain the trained target semantic segmentation model.

In this way, the semantic segmentation result corresponding to each semantic segmentation task is used only to train the corresponding task independent module, and the semantic segmentation result corresponding to each semantic segmentation task is also used to train the shared module. In this way, the shared module can learn the knowledge of different semantic segmentation tasks, and learn the more shared feature, and for each semantic segmentation task, only the independent task independent module part is trained, to ensure that the feature learned by the part is unique to the task. In this way, the accuracy of the semantic segmentation model can be effectively improved.

In another implementation of this application, after obtaining the multi-scale shared feature corresponding to each task training image, the backbone network 110 in the shared module 100 may input, into the corresponding task independent module in the task module 200 based on the semantic segmentation tasks, the multi-scale shared feature corresponding to each semantic segmentation task.

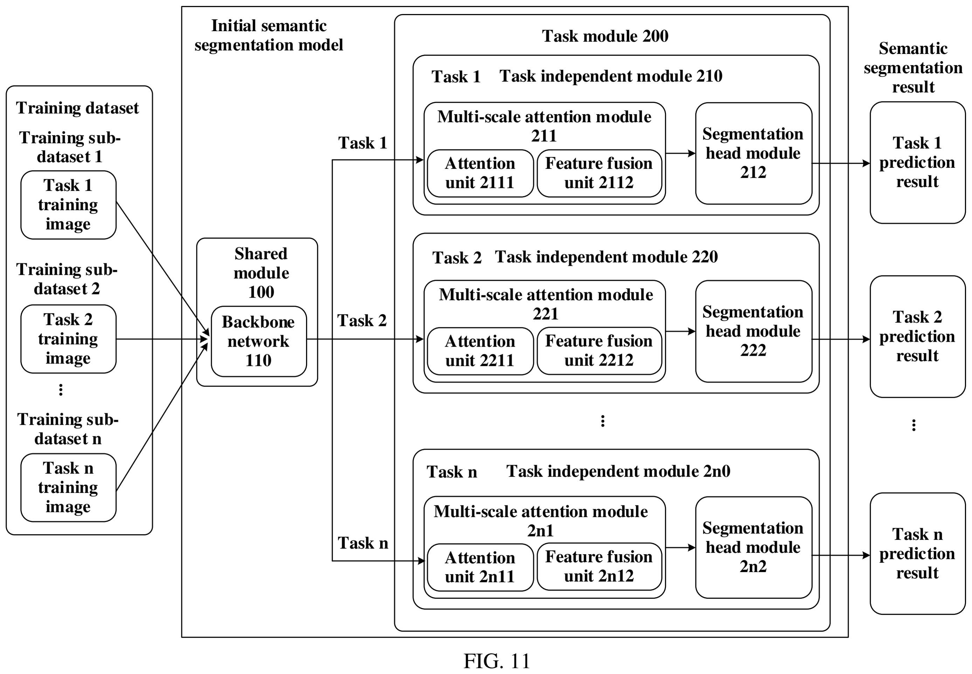

For example, as shown in FIG. 11, the backbone network 110 in the shared module 100 inputs, into the multi-scale attention module 211 in the task independent module 210, the multi-scale shared feature corresponding to the task 1 training image, inputs, into the multi-scale attention module 221 in the task independent module 220, the multi-scale shared feature corresponding to the task 2 training image, and inputs, into the multi-scale attention module 2n1 in the task independent module 2n0, the multi-scale shared feature corresponding to the task 3 training image. Then, the multi-scale attention module in each task independent module uses the received multi-scale shared feature as the target multi-scale shared feature by default, and performs feature fusion processing to obtain the corresponding single-scale feature, and inputs the single-scale feature into the corresponding segmentation head module. The segmentation head module obtains the corresponding semantic segmentation result. For example, the segmentation head module 212 obtains the semantic segmentation result of the task 1 (namely, the task 1 prediction result), the segmentation head module 222 obtains the semantic segmentation result of the task 2 (namely, the task 2 prediction result), and the segmentation head module 2n2 obtains the semantic segmentation result of the task n (namely, the task n prediction result).

In this implementation, after the prediction results of the semantic segmentation tasks are obtained, the shared module 100 is trained by using the prediction results of different semantic segmentation tasks (for example, the shared module 100 is separately trained by using the semantic segmentation result of the task 1, the semantic segmentation result of the task 2, and the semantic segmentation result of the task n). In addition, the corresponding task independent modules in the task module 200 are trained by using the prediction results of different semantic segmentation tasks (for example, the multi-scale attention module 211 and the segmentation head module 212 in the task independent module 210 are trained by using the semantic segmentation result of the task 1, the multi-scale attention module 221 and the segmentation head module 222 in the task independent module 220 are trained by using the semantic segmentation result of the task 2, and the multi-scale attention module 2n1 and the segmentation head module 2n2 in the task independent module 2n0 are trained by using the semantic segmentation result of the task n), until the training termination condition is met, to obtain the trained target semantic segmentation model.

In this way, the semantic segmentation result corresponding to each semantic segmentation task is used only to train the corresponding task independent module, and the semantic segmentation result corresponding to each semantic segmentation task is also used to train the shared module. In this way, the shared module can learn the knowledge of different semantic segmentation tasks, and learn the more shared feature, and for each semantic segmentation task, only the independent task independent module part is trained, to ensure that the feature learned by the part is unique to the task. In this way, the accuracy of the semantic segmentation model can be effectively improved.

The following further describes the target semantic segmentation model and the semantic segmentation method provided in the implementations of this application.

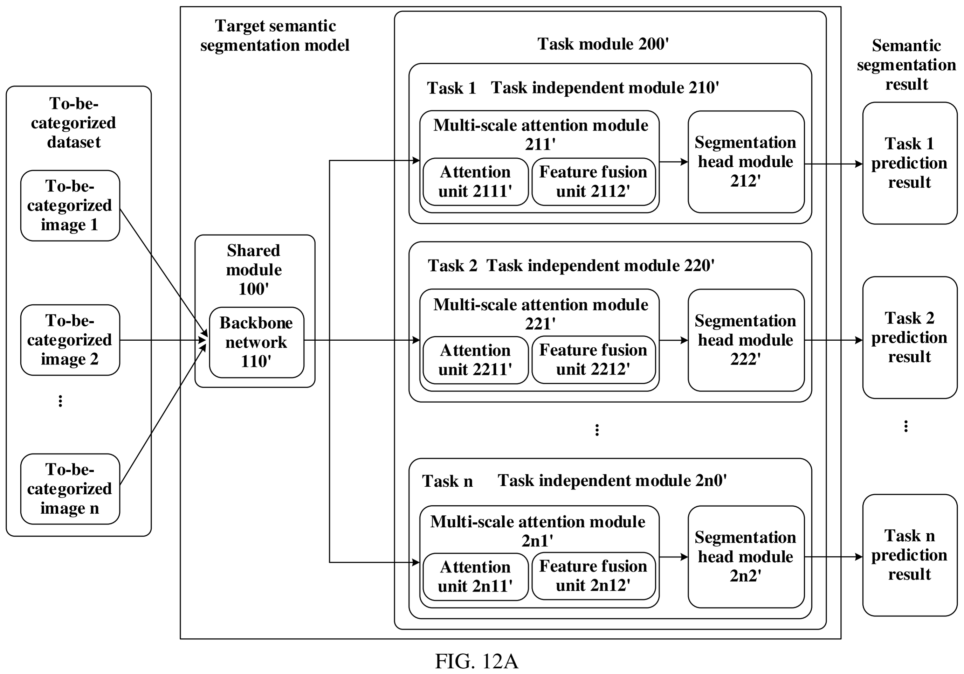

As shown in FIG. 12A, a target semantic segmentation model (namely, an overall system inference architecture) includes a shared module 100' (namely, a target shared module) and a task module 200' (namely, a target task module). The shared module 100' includes a backbone network 110', and the task module 200' includes a plurality of task independent modules (namely, target task independent modules) such as a task independent module 210' (as an example of a first target task independent module), a task independent module 220' (as an example of a second target task independent module), and a task independent module 2n0' (as an example of an $n^{th}$ target task independent module). The task independent module 210' includes a multi-scale attention module 211' and a segmentation head module 212', the task independent module 220' includes a multi-scale attention module 221' and a segmentation head module 222', and the task independent module 2n0' includes a multi-scale attention module 2n1' and a segmentation head module 2n2'. The multi-scale attention module 211' includes an attention unit 2111' and a feature fusion unit 2112', the multi-scale attention module 221' includes an attention unit 2211' and a feature fusion unit 2212', the multi-scale attention module 2n1' includes an attention unit 2n11' and a feature fusion unit 2n12', and the like.

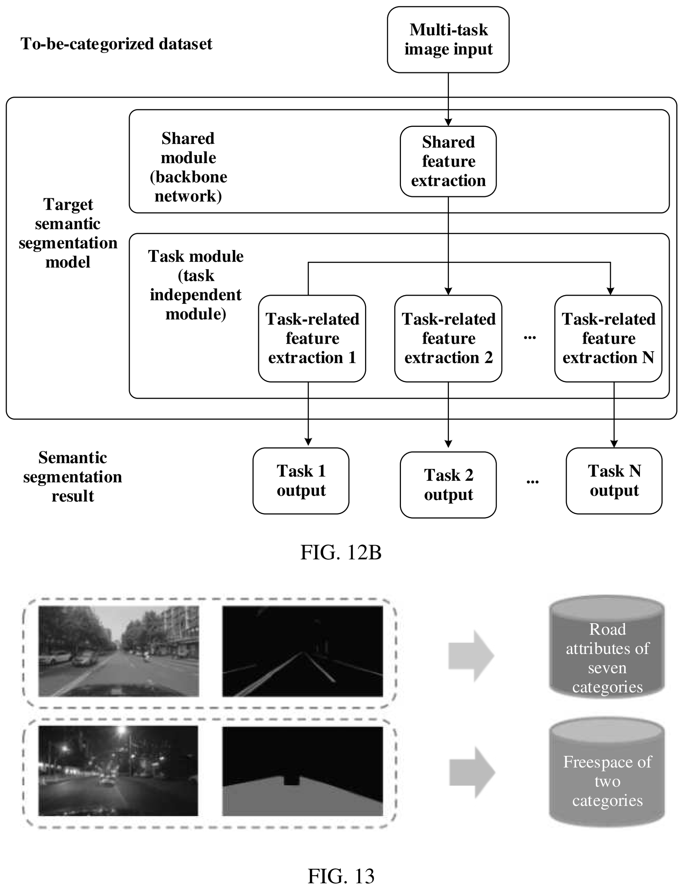

As shown in FIG. 12A and FIG. 12B, the semantic segmentation method provided in the implementations of this application includes the following process: to-be-categorized multi-task images (namely, to-be-categorized images included in a to-be-categorized dataset, for example, a to-be-categorized image 1, a to-be-categorized image 2, and a to-be-categorized image n) are input into the obtained target semantic segmentation model, and the backbone network 110' in the shared module 100' of the target semantic segmentation model performs shared feature extraction on the multi-task images, to obtain multi-scale shared features. Then, the shared module 100' inputs the obtained multi-scale shared feature into the task module 200', and the corresponding task independent module in the task module 200' obtains a corresponding semantic segmentation result based on the multi-scale shared feature. For example, the multi-scale shared feature corresponding to a task 1 is input into the task independent module 210' corresponding to the task 1 in the task module, the multi-scale shared feature corresponding to a task 2 is input into the task independent module 220' corresponding to the task 2 in the task module, and the multi-scale shared feature corresponding to a task n is input into a task independent module 2n0' corresponding to the task n in the task module. The multi-scale attention unit in each task independent module performs corresponding task-related feature extraction such as task-related feature extraction 1, task-related feature extraction 2, and task-related feature extraction N, and the corresponding segmentation head module performs categorization, to obtain outputs of different semantic segmentation tasks such as a task 1 output (namely, a task 1 prediction result), a task 2 output (namely, a task 2 prediction result), and a task N output (namely, a task n prediction result) as semantic segmentation results corresponding to the multi-task images.

In the semantic segmentation method provided in this implementation, after actual scenario images (namely, the multi-task image) are input into the unified backbone network, output features pass through the independent modules of different tasks, to generate output results of different segmentation tasks. This effectively improves semantic segmentation efficiency and semantic segmentation accuracy.

In addition, the semantic segmentation method provided in this implementation may implement multi-task semantic segmentation based on a deep neural network. Therefore, the semantic segmentation method may be understood as a new method for multi-task semantic segmentation.

The semantic segmentation method provided in the implementations of this application may be applied to an autonomous driving scenario (namely, an application scenario 1). The autonomous driving scenario is complex. A car or an autonomous driving server requires many sensing tasks to assist planning and control and decision-making. A freespace task can help distinguish freespace, and attributes such as a lane line and a lamp pole can assist in positioning. Numerous semantic segmentation tasks bring a significant increase in computing power and partial labeling of different tasks, posing great challenges. Therefore, in the autonomous driving application scenario, the freespace needs to be detected to ensure that the car travels in the freespace. In addition, the lane line, the street lamp, and the like on a road are very important for image composition and positioning. The two pieces of information both need to be output by the semantic segmentation model.

For example, as shown in FIG. 13, the semantic segmentation method may be applied to the autonomous driving scenario, to implement categorization tasks such as categorization of freespace (freespace) of two categories and road feature attributes of seven categories.

There are a large quantity of segmentation tasks and a high requirement on real-time performance in the autonomous driving scenario, and the problem can be resolved by using the semantic segmentation model (namely, the multi-task semantic segmentation network) and the method provided in this implementation. In this way, two tasks can be segmented with only a small quantity of parameters and a short delay, and model training and deployment are simple. In addition, with one image input, segmentation results of two tasks can be output. In other words, the semantic segmentation method provided in this implementation is applied to the autonomous driving application scenario, to resolve the problem of the significant increase in the computing power and partial labeling of different tasks that are brought by the plurality of semantic segmentation tasks in the autonomous driving scenario.

To be specific, in the multi-task semantic segmentation network provided in the implementations of this application, the unified backbone network is used for different tasks, to extract the shared feature unrelated to the task, and the multi-scale attention module and the segmentation head module that are independently provided for each task extract the feature related to the task, so that the plurality of tasks can be integrated into one network and the delay is greatly reduced. Moreover, sharing the shared feature by the plurality of tasks can improve model precision. In addition, data of an original single task can be fully used, and no additional labeling is required. This greatly reduces labeling costs.

The semantic segmentation method provided in the implementations of this application may also be applied to a terminal vision scenario (namely, an application scenario 2). For example, in the terminal vision scenario, semantic segmentation is indispensable for a plurality of features such as background blurring and image matting in photographing with a mobile phone. However, data of each task is labeled for the task, which makes it impossible to obtain full labeled data and incurs huge relabeling costs. If a plurality of tasks (for example, performing different processing such as background blurring and image matting on an image) are expected to be simultaneously run on the device, use of a plurality of models causes an unacceptable delay for the device. Therefore, it is necessary and urgent to have a unified model that can process partial labeled data and greatly reduce the delay. The semantic segmentation method provided in this implementation can well greatly reduce an inference delay without additionally labeling data.

Certainly, the semantic segmentation method provided in this implementation may also be applied to other computer vision or semantic segmentation scenarios like medical image processing, video surveillance processing, and target tracking.

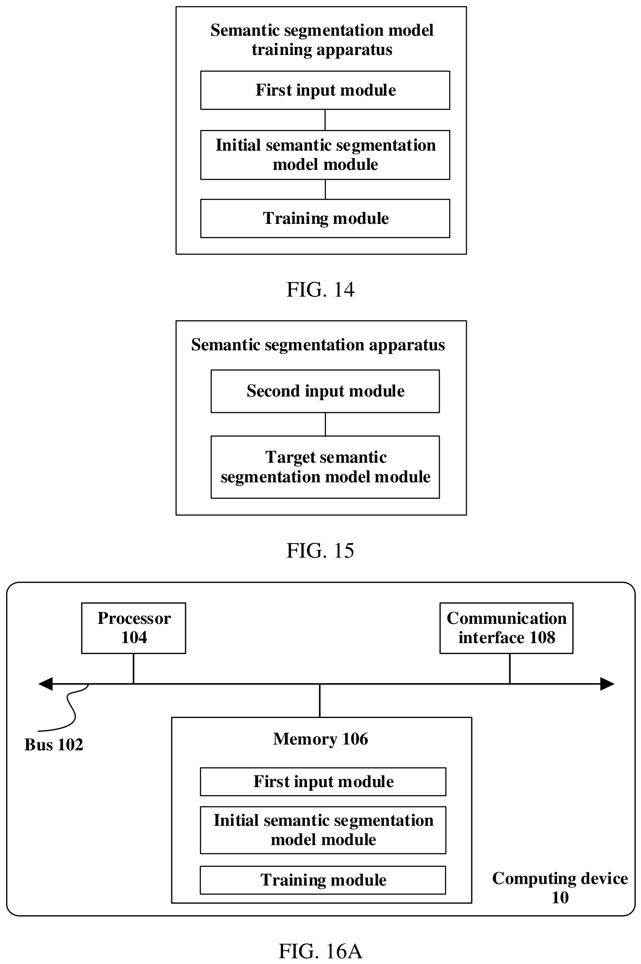

This application further provides a semantic segmentation model training apparatus. As shown in FIG. 14, the apparatus includes a first input module, an initial semantic segmentation model module, and a training module.

The first input module is configured to input, into an initial semantic segmentation model, a first training sample image included in a first training sub-dataset, where the first training sub-dataset has a corresponding semantic segmentation task, the first training sub-dataset includes at least one first training sample image, the first training sample image includes at least one first category label, the initial semantic segmentation model includes a first initial semantic segmentation module and a second initial semantic segmentation module, the second initial semantic segmentation module includes a first initial task independent module, and the first initial task independent module has a corresponding semantic segmentation task.

The initial semantic segmentation model module is configured to perform semantic recognition processing on the training sample image, to obtain a semantic segmentation result corresponding to the training sample image. The first initial semantic segmentation module in the initial semantic segmentation model included in the initial semantic segmentation model module performs first feature processing on the first training sample image, to obtain a first image feature; and the first initial task independent module in the second initial semantic segmentation module obtains a first semantic segmentation result based on the first image feature.

The training module is configured to train the initial semantic segmentation model based on the first semantic segmentation result, to obtain a target semantic segmentation model.

The first input module, the initial semantic segmentation model module, and the training module may all be implemented by software, or may be implemented by hardware. For example, the following uses the first input module as an example to describe an implementation of the first input module. Similarly, for implementations of the initial semantic segmentation model module and the training module, refer to the implementation of the first input module.

When a module is used as an example of a software functional unit, the first input module may include code that runs on a computing instance. The computing instance may include at least one of a physical host (a computing device), a virtual machine, and a container. Further, there may be one or more computing instances. For example, the first input module may include code that runs on a plurality of hosts/virtual machines/containers. The plurality of hosts/virtual machines/containers configured to run the code may be distributed in a same region (region) or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or between VPCs in different regions. Interconnection between VPCs is implemented through the communication gateway.

When a module is used as an example of a hardware functional unit, the first input module may include at least one computing device, for example, a server. Alternatively, the first input module may be a device implemented by using an application-specific integrated circuit (application-specific integrated circuit, ASIC) or a programmable logic device (programmable logic device, PLD), or the like. The PLD may be a complex programmable logic device (complex programmable logic device, CPLD), a field programmable gate array (field programmable gate array, FPGA), generic array logic (generic array logic, GAL), or any combination thereof.

The plurality of computing devices included in the first input module may be distributed in a same region or different regions. The plurality of computing devices included in the first input module may be distributed in a same AZ or different AZs. Likewise, the plurality of computing devices included in the first input module may be distributed in a same VPC or a plurality of VPCs. The plurality of computing devices may be any combination of computing devices such as the server, the ASIC, the PLD, the CPLD, the FPGA, and the GAL.

In another embodiment, the first input module may be configured to perform any step in the semantic segmentation model training method, the initial semantic segmentation model module may be configured to perform any step in the semantic segmentation model training method, and the training module may be configured to perform any step in the semantic segmentation model training method. Steps that the first input module, the initial semantic segmentation model module, and the training module are responsible for implementing may be specified based on a requirement. The first input module, the initial semantic segmentation model module, and the training module respectively implement different steps in the semantic segmentation model training method, to implement all functions of the semantic segmentation model training apparatus.

In this implementation, for a process in which each module implements a corresponding function, refer to the foregoing content related to the semantic segmentation model training method. Details are not described herein again.

In this implementation, the semantic segmentation model training apparatus may also be used in a computing device like a computer or a server, or used in a computing device cluster including at least one computing device, to implement a semantic segmentation model training function.

This application further provides a semantic segmentation apparatus. As shown in FIG. 15, the apparatus includes a second input module and a target semantic segmentation model module.

The second input module is configured to input, into a target semantic segmentation model, a to-be-categorized image included in a to-be-categorized dataset, where the to-be-categorized dataset includes at least one to-be-categorized image, the target semantic segmentation model includes a first target semantic segmentation module and a second target semantic segmentation module, the second target semantic segmentation module includes a first target task independent module, the first target task independent module has a corresponding semantic segmentation task, and the target semantic segmentation model is obtained based on the foregoing semantic segmentation model training method.

The target semantic segmentation model module is configured to perform semantic recognition processing on the to-be-categorized image by using the target semantic segmentation model included in the target semantic segmentation model module, to obtain a semantic segmentation result corresponding to the to-be-categorized image. In other words, shared feature processing is performed on the to-be-categorized image by using a target shared module in the target semantic segmentation model included in the target semantic segmentation model module, to obtain a multi-scale shared feature; and a second semantic segmentation result is obtained based on the multi-scale shared feature and by using the first target task independent module in the target task module.

The second input module and the target semantic segmentation model module may both be implemented by software, or may be implemented by hardware. For example, the following uses the second input module as an example to describe an implementation of the second input module. Similarly, for an implementation of the target semantic segmentation model module, refer to the implementation of the second input module.

When a module is used as an example of a software functional unit, the second input module may include code that runs on a computing instance. The computing instance may include at least one of a physical host (a computing device), a virtual machine, and a container. Further, there may be one or more computing instances. For example, the second input module may include code that runs on a plurality of hosts/virtual machines/containers. The plurality of hosts/virtual machines/containers configured to run the code may be distributed in a same region (region) or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or between VPCs in different regions. Interconnection between VPCs is implemented through the communication gateway.

When a module is used as an example of a hardware functional unit, the second input module may include at least one computing device, for example, a server. Alternatively, the second input module may be a device implemented by using an application-specific integrated circuit (application-specific integrated circuit, ASIC) or a programmable logic device (programmable logic device, PLD), or the like. The PLD may be a complex programmable logic device (complex programmable logic device, CPLD), a field programmable gate array (field programmable gate array, FPGA), generic array logic (generic array logic, GAL), or any combination thereof.

The plurality of computing devices included in the second input module may be distributed in a same region or different regions. The plurality of computing devices included in the second input module may be distributed in a same AZ or different AZs. Likewise, the plurality of computing devices included in the second input module may be distributed in a same VPC or a plurality of VPCs. The plurality of computing devices may be any combination of computing devices such as the server, the ASIC, the PLD, the CPLD, the FPGA, and the GAL.

In another embodiment, the second input module may be configured to perform any step in the semantic segmentation method, and the target semantic segmentation model module may be configured to perform any step in the semantic segmentation method. Steps that the second input module and the target semantic segmentation model module are responsible for implementing may be specified based on a requirement. The second input module and the target semantic segmentation model module respectively implement different steps in the semantic segmentation method, to implement all functions of the semantic segmentation apparatus.

In this implementation, for a process in which each module implements a corresponding function, refer to the foregoing content related to the semantic segmentation method. Details are not described herein again.

In this implementation, the semantic segmentation apparatus may also be used in a computing device like a computer or a server, or used in a computing device cluster including at least one computing device, to implement a semantic segmentation function.

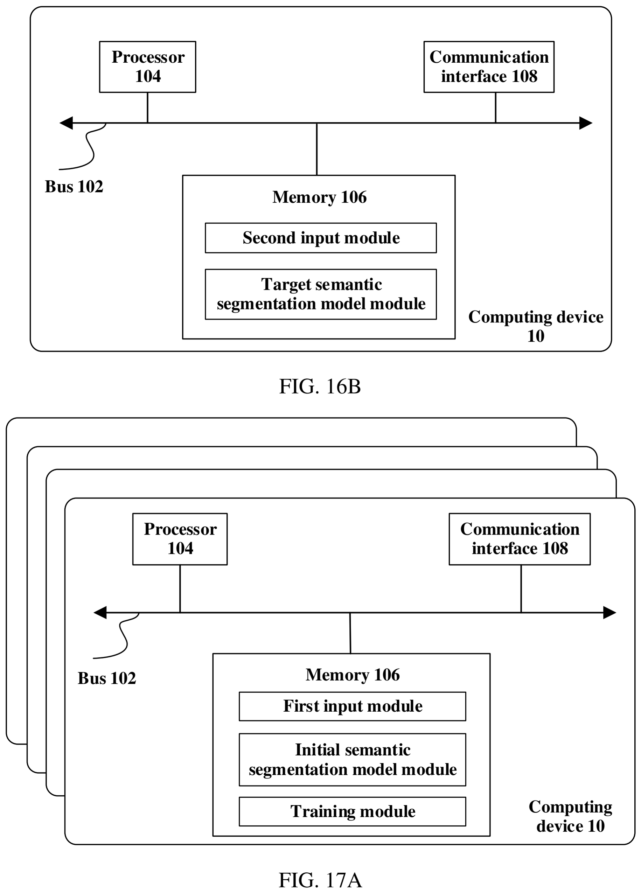

This application further provides a computing device 10. As shown in FIG. 16A and 16B, the computing device 10 includes a bus 102, a processor 104, a memory 106, and a communication interface 108. The processor 104, the memory 106, and the communication interface 108 communicate with each other through the bus 102. The computing device 10 may be a server or a terminal device. It should be understood that quantities of processors and memories in the computing device 10 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by only one line in FIG. 16A and 16B, but this does not indicate that there is only one bus or one type of bus. The bus 102 may include a path for transferring information between components (for example, the memory 106, the processor 104, and the communication interface 108) in the computing device 10.

The processor 104 may include any one or more of processors such as a central processing unit (central processing unit, CPU), a graphics processing unit (graphics processing unit, GPU), a micro processor (micro processor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

As shown in FIG. 16A, the memory 106 stores executable program code, and the processor 104 executes the executable program code to separately implement the functions of the first input module, the initial semantic segmentation model module, and the training module, that is, implement the function of the semantic segmentation model training apparatus, so as to implement the semantic segmentation model training method. In other words, the memory 106 stores instructions used to perform the semantic segmentation model training method.

Alternatively, as shown in FIG. 16B, the memory 106 stores executable code, and the processor 104 executes the executable code to separately implement the functions of the second input module and the target semantic segmentation model module, that is, implement the function of the semantic segmentation apparatus, so as to implement the semantic segmentation method. In other words, the memory 106 stores instructions used to perform the semantic segmentation method.

The communication interface 108 implements communication between the computing device 10 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 17A, the computing device cluster includes at least one computing device 10. The memory 106 in the one or more computing devices 10 in the computing device cluster may store same instructions used to perform the semantic segmentation model training method.

In some possible implementations, the memory 106 in each of the one or more computing devices 10 in the computing device cluster may store some instructions used to perform the semantic segmentation model training method. In other words, a combination of one or more computing devices 10 may jointly execute the instructions used to perform the semantic segmentation model training method.

The memory 106 in different computing devices 10 in the computing device cluster may store different instructions respectively used to perform some functions of the semantic segmentation model training apparatus. In other words, the instructions stored in the memory 106 in different computing devices 10 may implement the functions of one or more of the first input module, the initial semantic segmentation model module, and the training module.

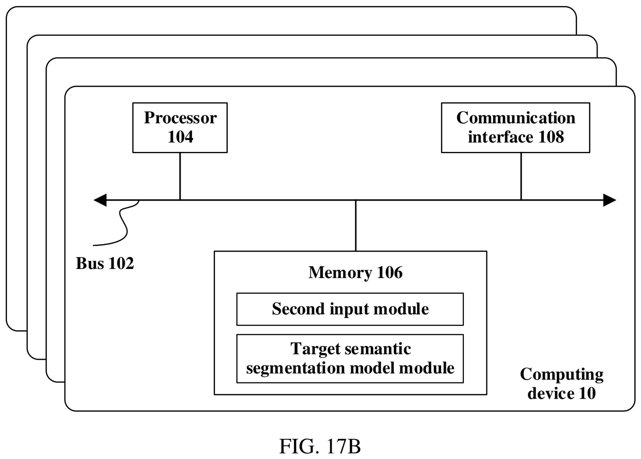

As shown in FIG. 17B, the computing device cluster includes at least one computing device 10. The memory 106 in the one or more computing devices 10 in the computing device cluster may store same instructions used to perform the semantic segmentation method.

In some possible implementations, the memory 106 in each of the one or more computing devices 10 in the computing device cluster may store some instructions used to perform the semantic segmentation method. In other words, a combination of one or more computing devices 10 may jointly execute the instructions used to perform the semantic segmentation method.

The memory 106 in different computing devices 10 in the computing device cluster may store different instructions respectively used to perform some functions of the semantic segmentation apparatus. In other words, the instructions stored in the memory 106 in different computing devices 10 may implement the functions of one or more of the second input module and the target semantic segmentation model module.

In some possible implementations, the one or more computing devices in the computing device cluster may be connected over a network. The network may be a wide area network, a local area network, or the like.

An implementation of this application further provides a computer program product including instructions. The computer program product may be software or a program product that includes instructions and that can run on a computing device or be stored in any usable medium. When the computer program product runs on at least one computing device, the at least one computing device is enabled to perform the semantic segmentation model training method or the semantic segmentation method.

An implementation of this application further provides a computer-readable storage medium. The computer-readable storage medium may be any usable medium that can be stored by a computing device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or like. The computer-readable storage medium includes instructions, and the instructions instruct the computing device to perform the semantic segmentation model training method, or instructs the computing device to perform the semantic segmentation method.

In the implementations of this application, the semantic segmentation model training method and/or the semantic segmentation method may be applied to an electronic device. The electronic device may be determined based on a scenario, for example, may be a car, an intelligent driving server, or an autonomous driving sensing system in the foregoing intelligent driving scenario (namely, the autonomous driving scenario); or may be a terminal device or an electronic device like a mobile phone, a tablet computer, or a wearable device in the terminal vision scenario. The semantic segmentation model training method and/or the semantic segmentation method may be further applied to scenarios that require semantic segmentation, such as a medical image, a smart city, medical image processing, and scenario understanding. The semantic segmentation model training method and/or the semantic segmentation method are/is deployed on a computing node of a related device. Through software reconstruction, more semantic segmentation tasks can be processed with only a small quantity of parameters and a short delay.

In addition, the semantic segmentation model training method and/or the semantic segmentation method may be applied to a computing device, or applied to a computing device cluster including at least one computing device. The computing device or the computing device cluster is configured to deploy an algorithm related to the semantic segmentation model training method and/or an algorithm related to the semantic segmentation method in the implementations of this application, to implement a corresponding function. The computing device may be an electronic device like the car, the intelligent driving server, the mobile phone, the tablet computer, or the wearable device, or may be another type of device, and may be selected and set based on a requirement.

In some other implementations of this application, the first initial semantic segmentation module, the second initial semantic segmentation module, the initial task independent module, the first initial processing submodule, and the second initial processing submodule may alternatively be disposed as other modules based on a requirement. The first feature processing, the second feature processing, and the third feature processing may alternatively be set to other image feature-related processing based on a requirement. In addition, the first image feature, the second image feature, the third image feature, and the like may alternatively be other image features, and may be set based on a requirement.

In the implementations of this application, terms "first", "second", and the like are merely used for distinguishing and description, but should not be understood as an indication or implication of relative importance.

In the accompanying drawings of the implementations of this application, some structural or method features may be shown in a particular arrangement and/or sequence. However, it should be understood that such a particular arrangement and/or sequence may not be required. In some implementations, these features may be arranged in a manner and/or sequence different from that shown in the descriptive accompanying drawings. In addition, inclusion of the structural or method features in a particular figure does not imply that such features are required in all implementations, and in some implementations, these features may not be included or may be combined with other features.

Although this application has been illustrated and described with reference to some implementations of this application, a person of ordinary skill in the art should understand that the foregoing content is further detailed descriptions of this application with reference to specific implementations, and it cannot be considered that specific implementations of this application are merely limited to these descriptions. A person skilled in the art may make various changes in form and detail, including making several simple derivations or substitutions without departing from the spirit and scope of this application.

**Claims**

1.  A semantic segmentation model training method, applied to an electronic device, wherein the method comprises:

    inputting, into an initial semantic segmentation model, a first training sample image comprised in a first training sub-dataset, wherein the first training sub-dataset has a corresponding semantic segmentation task, the first training sub-dataset comprises at least one first training sample image, the first training sample image comprises at least one first category label, the initial semantic segmentation model comprises a first initial semantic segmentation module and a second initial semantic segmentation module, the second initial semantic segmentation module comprises a first initial task independent module, and the first initial task independent module has a corresponding semantic segmentation task;
    performing, by the first initial semantic segmentation module, first feature processing on the first training sample image, to obtain a first image feature;
    obtaining, by the first initial task independent module in the second initial semantic segmentation module, a first semantic segmentation result based on the first image feature; and
    training the initial semantic segmentation model based on the first semantic segmentation result, to obtain a target semantic segmentation model.

2.  The semantic segmentation model training method according to claim 1, wherein the semantic segmentation task corresponding to the first training sub-dataset is the same as the semantic segmentation task corresponding to the first initial task independent module.

3.  The semantic segmentation model training method according to claim 2, wherein training the initial semantic segmentation model based on the first semantic segmentation result comprises:

    training the first initial semantic segmentation module based on the first semantic segmentation result, to obtain a first target semantic segmentation module; and
    training the first initial task independent module based on the first semantic segmentation result, to obtain a first target task independent module, so as to obtain a second target semantic segmentation module comprising the first target task independent module.

4.  The semantic segmentation model training method according to claim 1, wherein the semantic segmentation task corresponding to the first training sub-dataset is different from the semantic segmentation task corresponding to the first initial task independent module.

5.  The semantic segmentation model training method according to claim 4, wherein training the initial semantic segmentation model based on the first semantic segmentation result comprises:
training the first initial semantic segmentation module based on the first semantic segmentation result, to obtain a first target semantic segmentation module.

6.  The semantic segmentation model training method according to any one of claims 1 to 5, wherein the first initial task independent module comprises a first initial processing submodule and a second initial processing submodule, and obtaining, by the first initial task independent module, the first semantic segmentation result based on the first image feature comprises:

    performing, by the first initial processing submodule, second feature processing on the first image feature, to obtain a second image feature; and
    obtaining, by the second initial processing submodule, the first semantic segmentation result based on the second image feature.

7.  The semantic segmentation model training method according to claim 6, wherein obtaining, by the second initial processing submodule, the first semantic segmentation result based on the second image feature comprises:

    performing, by the second initial processing submodule, third feature processing on the second image feature, to obtain a third image feature; and
    obtaining, by the second initial processing submodule based on the third image feature, probability values corresponding to different semantic segmentation results, and using a semantic segmentation result with a maximum probability value as the first semantic segmentation result.

8.  The semantic segmentation model training method according to claim 7, wherein the first feature processing is shared feature extraction processing, the first image feature is a multi-scale shared feature comprising shared features of a plurality of different scales, the second feature processing is feature fusion processing, the second image feature is a single-scale feature, the third feature processing is scale adjustment processing, and the third image feature is a single-scale feature whose scale is different from a scale of the second image feature.

9.  The semantic segmentation model training method according to claim 8, wherein the scale of the third image feature is consistent with a scale of a training sample image corresponding to the third image feature.

10. The semantic segmentation model training method according to any one of claims 6 to 9, wherein the first initial processing submodule is a multi-scale attention module based on an attention mechanism, and the second initial processing submodule is a segmentation head module.

11. The semantic segmentation model training method according to any one of claims 1 to 10, wherein the first initial semantic segmentation module is a shared module comprising a backbone network.

12. The semantic segmentation model training method according to any one of claims 1 to 11, wherein a training dataset to which the first training sub-dataset belongs comprises a plurality of training sub-datasets, the training sub-datasets correspond to different semantic segmentation tasks, the second initial semantic segmentation module comprises a plurality of initial task independent modules, and the initial task independent modules correspond to different semantic segmentation tasks, and the method further comprises:

    inputting, into the initial semantic segmentation model, a training sample image comprised in each training sub-dataset, to obtain a corresponding semantic segmentation result;
    training the first initial semantic segmentation module based on the semantic segmentation result corresponding to each semantic segmentation task, to obtain the first target semantic segmentation module; and
    training, based on the semantic segmentation result corresponding to each semantic segmentation task, the initial task independent module corresponding to the semantic segmentation task, to obtain a target task independent module, so as to obtain the second target semantic segmentation module comprising the target task independent module.

13. The semantic segmentation model training method according to claim 12, wherein the training dataset comprises the first training sub-dataset and a second training sub-dataset, the first training sub-dataset corresponds to a first semantic segmentation task, the second training sub-dataset corresponds to a second semantic segmentation task, the second initial semantic segmentation module comprises the first initial task independent module and a second initial task independent module, the first initial task independent module corresponds to the first semantic segmentation task, and the second initial task independent module corresponds to the second semantic segmentation task, and training, based on the semantic segmentation result corresponding to each semantic segmentation task, the initial task independent module corresponding to the semantic segmentation task, to obtain the target task independent module comprises:

> training the first initial task independent module based on the semantic segmentation result corresponding to the first semantic segmentation task, to obtain the first target task independent module; and
> training the second initial task independent module based on the semantic segmentation result corresponding to the second semantic segmentation task, to obtain a second target task independent module.

14. A semantic segmentation method, applied to an electronic device, wherein the method comprises:

> inputting, into a target semantic segmentation model, a to-be-categorized image comprised in a to-be-categorized dataset, wherein the to-be-categorized dataset comprises at least one to-be-categorized image, the target semantic segmentation model comprises a first target semantic segmentation module and a second target semantic segmentation module, the second target semantic segmentation module comprises a first target task independent module, the first target task independent module has a corresponding semantic segmentation task, and the target semantic segmentation model is obtained based on the semantic segmentation model training method according to any one of claims 1 to 13;
> performing, by the first target semantic segmentation module, fourth feature processing on the to-be-categorized image, to obtain a fourth image feature; and
> obtaining, by the first target task independent module in the second target semantic segmentation module, a second semantic segmentation result based on the fourth image feature.

15. A semantic segmentation model training apparatus, comprising:

> a first input module, configured to input, into an initial semantic segmentation model, a first training sample image comprised in a first training sub-dataset, wherein the first training sub-dataset has a corresponding semantic segmentation task, the first training sub-dataset comprises at least one first training sample image, the first training sample image comprises at least one first category label, the initial semantic segmentation model comprises a first initial semantic segmentation module and a second initial semantic segmentation module, the second initial semantic segmentation module comprises a first initial task independent module, and the first initial task independent module has a corresponding semantic segmentation task;
> an initial semantic segmentation model module, configured to: perform first feature processing on the first training sample image by using the first initial semantic segmentation module in the initial semantic segmentation model comprised in the initial semantic segmentation model module, to obtain a first image feature; and obtain a first semantic segmentation result based on the first image feature and by using the first initial task independent module in the second initial semantic segmentation module; and
> a training module, configured to train the initial semantic segmentation model based on the first semantic segmentation result, to obtain a target semantic segmentation model.

16. A semantic segmentation apparatus, comprising:

> a second input module, configured to input, into a target semantic segmentation model, a to-be-categorized image comprised in a to-be-categorized dataset, wherein the to-be-categorized dataset comprises at least one to-be-categorized image, the target semantic segmentation model comprises a first target semantic segmentation module and a second target semantic segmentation module, the second target semantic segmentation module comprises a first target task independent module, the first target task independent module has a corresponding semantic segmentation task, and the target semantic segmentation model is obtained based on the semantic segmentation model training method according to any one of claims 1 to 13; and
> a target semantic segmentation model module, configured to: perform fourth feature processing on the to-be-categorized image by using the first target semantic segmentation module in the target semantic segmentation model comprised in the target semantic segmentation model module, to obtain a fourth image feature; and obtain a second semantic segmentation result based on the fourth image feature and by using the first target task independent module in the second target semantic segmentation module.

17. A computing device cluster, comprising at least one computing device, wherein each computing device comprises a processor and a memory, and the processor of the at least one computing device is configured to execute instructions stored in the memory of the at least one computing device, so that the computing device cluster performs the semantic segmentation model training method according to any one of claims 1 to 13, or the computing device cluster performs the semantic segmentation method according to claim 14.

18. A computer program product comprising instructions, wherein when the instructions are run by a computing device cluster, the computing device cluster is enabled to perform the semantic segmentation model training method according to any one of claims 1 to 13, or the computing device cluster is enabled to perform the semantic segmentation method according to claim 14.

19. A computer-readable storage medium, comprising computer program instructions, wherein when the computer program instructions are executed by a computing device cluster, the computing device cluster performs the semantic segmentation model training method according to any one of claims 1 to 13, or the computing device cluster performs the semantic segmentation method according to claim 14.

FIG. 1

FIG. 2

FIG. 3

S110

Input, into an initial semantic segmentation model, a training sample image included in a training sub-dataset

S120

The initial semantic segmentation model performs semantic recognition processing on the training sample image, to obtain a semantic segmentation result corresponding to the training sample image, where an initial shared module in the initial semantic segmentation model performs shared feature extraction processing on the training sample image, to obtain a multi-scale shared feature, and an initial task independent module in an initial task module obtains the semantic segmentation result based on the multi-scale shared feature

S130

Train the initial semantic segmentation model based on the semantic segmentation result, to obtain a target semantic segmentation model

FIG. 4

S210

Input, into a target semantic segmentation model, a to-be-categorized image included in a to-be-categorized dataset

S220

The target semantic segmentation model performs semantic recognition processing on the to-be-categorized image, to obtain a semantic segmentation result corresponding to the to-be-categorized image, where a target shared module in the target semantic segmentation model performs shared feature extraction processing on the to-be-categorized image included in the to-be-categorized dataset, to obtain a multi-scale shared feature, and a target task independent module in a target task module obtains the semantic segmentation result based on the multi-scale shared feature, and uses the semantic segmentation result as the semantic segmentation result of the to-be-categorized image

FIG. 5

EP 4 654 151 A1

FIG. 6

**Backbone network
(Backbone)**

**Stage4 32X
(Feat_8x)**

**Stage3 32X
(Feat_16x)**

**Stage2 8X
(Feat_8x)**

FIG. 7

**Stage2 8X
(Feat_8x)**

**Stage3 16X
(Feat_16x)**

**Stage4 32X
(Feat_32x)**

A

A

**Shared feature
(Shared Feature)**

**Multi-scale attention module
(MSAM)**

FIG. 8

FIG. 9

FIG. 10

EP 4 654 151 A1

FIG. 11

FIG. 12A

EP 4 654 151 A1

**To-be-categorized dataset**

Multi-task image input

**Target semantic segmentation model**

Shared module (backbone network)

Shared feature extraction

Task module (task independent module)

Task-related feature extraction 1

Task-related feature extraction 2

...

Task-related feature extraction N

**Semantic segmentation result**

Task 1 output

Task 2 output

...

Task N output

FIG. 12B

Road attributes of seven categories

Freespace of two categories

FIG. 13

Semantic segmentation model
training apparatus

First input module

Initial semantic segmentation
model module

Training module

FIG. 14

Semantic segmentation apparatus

Second input module

Target semantic
segmentation model module

FIG. 15

Processor
104

Communication
interface 108

Bus 102

Memory 106

First input module

Initial semantic segmentation
model module

Training module

Computing device
10

FIG. 16A

FIG. 16B

FIG. 17A

Processor
104

Communication
interface 108

Bus 102

Memory 106

Second input module

Target semantic
segmentation model module

Computing
device 10

FIG. 17B

## INTERNATIONAL SEARCH REPORT

| International application No. |
|---|
| **PCT/CN2024/075458** |

**A.    CLASSIFICATION OF SUBJECT MATTER**

G06V 10/26(2022.01)i

According to International Patent Classification (IPC) or to both national classification and IPC

**B.    FIELDS SEARCHED**

Minimum documentation searched (classification system followed by classification symbols)

G06V

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 语义分割, 部分, 标识, 标注, 标签, 类别, 骨干, 注意力, 训练, training, semantic segmentation, image, feature, label, tag

**C.    DOCUMENTS CONSIDERED TO BE RELEVANT**

| Category* | Citation of document, with indication, where appropriate, of the relevant passages | Relevant to claim No. |
|---|---|---|
| PX | CN 116109825 A (HUAWEI TECHNOLOGIES CO., LTD.) 12 May 2023 (2023-05-12) claims 1-19 | 1-19 |
| X | CN 113159049 A (SHANGHAI XINYI INTELLIGENT TECHNOLOGY CO., LTD.) 23 July 2021 (2021-07-23) description, paragraphs [0023]-[0059] | 1-19 |
| A | CN 110175613 A (CHANGSHU INSTITUTE OF TECHNOLOGY) 27 August 2019 (2019-08-27) entire document | 1-19 |
| A | US 2019385021 A1 (DRVISION TECHNOLOGIES LLC.) 19 December 2019 (2019-12-19) entire document | 1-19 |

☐ Further documents are listed in the continuation of Box C.   ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **23 April 2024** | **26 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/075458**

| Patent document cited in search report | | | Publication date (day/month/year) | Patent family member(s) | | | Publication date (day/month/year) |
|---|---|---|---|---|---|---|---|
| CN | 116109825 | A | 12 May 2023 | None | | | |
| CN | 113159049 | A | 23 July 2021 | None | | | |
| CN | 110175613 | A | 27 August 2019 | None | | | |
| US | 2019385021 | A1 | 19 December 2019 | US | 2020242414 | A1 | 30 July 2020 |
| | | | | US | 10891523 | B2 | 12 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310125208